# EUROPEAN PATENT SPECIFICATION

(11) **EP 4 037 266 B1**
(45) Date of publication and mention of the grant of the patent: **21.08.2024**
(21) Application number: 20881940.9
(22) Date of filing: 30.10.2020
(51) Int. Cl.: H04L 45/00, H04L 69/22, H04L 69/16, H04L 45/745

(54) **METHOD FOR PROCESSING MESSAGE, AND NETWORK NODE AND SYSTEM**
VERFAHREN ZUR NACHRICHTENVERARBEITUNG SOWIE NETZWERKKNOTEN UND SYSTEM
PROCÉDÉ DE TRAITEMENT DE MESSAGES, ET NOEUD DE RÉSEAU ET SYSTÈME

(30) Priority: 01.11.2019 CN 201911061769; 14.11.2019 CN 201911115344
(43) Date of publication of application: 03.08.2022
(73) Proprietor: Huawei Technologies Co., Ltd., Shenzhen, Guangdong 518129 (CN)
(72) Inventor: LI, Cheng, Shenzhen, Guangdong 518129 (CN); XIA, Yang, Shenzhen, Guangdong 518129 (CN); LI, Zhenbin, Shenzhen, Guangdong 518129 (CN)
(74) Representative: Maiwald GmbH
(86) International application number: PCT/CN2020/125352
(87) International publication number: WO 2021/083341

(56) References cited:
- EP-A1- 3 972 207
- WO-A1-2019/205799
- CN-A- 109 981 457
- CN-A- 109 981 457
- CN-A- 109 981 458
- US-B1- 10 230 605
- PREVIDI S ET AL: "IS-IS Extensions for Segment Routing", INTERNET CITATION, 10 May 2019 (2019-05-10), XP002806569, Retrieved from the Internet <URL:https://datatracker.ietf.org/doc/pdf/draft-ietf-isis-segment-routing-extensions-25> [retrieved on 20220520]
- FILSFILS C ET AL: "Segment Routing Architecture; rfc8402.txt", SEGMENT ROUTING ARCHITECTURE; RFC8402.TXT, INTERNET ENGINEERING TASK FORCE, IETF; STANDARD, INTERNET SOCIETY (ISOC) 4, RUE DES FALAISES CH- 1205 GENEVA, SWITZERLAND, 25 July 2018 (2018-07-25), pages 1 - 32, XP015126362
- FILSFILS C ET AL: "IPv6 Segment Routing Header (SRH); draft-ietf-6man-segment-routing-header-26.txt", no. 26, 22 October 2019 (2019-10-22), pages 1 - 32, XP015135684, Retrieved from the Internet <URL:https://tools.ietf.org/html/draft-ietf-6man-segment-routing-header-26> [retrieved on 20191022]
- LI Z ET AL: "Compressed SRv6 Network Programming draft-li-spring-compressed-srv6-np-00", 22 July 2019 (2019-07-22), pages 1 - 15, XP015134411, Retrieved from the Internet <URL:https://tools.ietf.org/html/draft-li-spring-compressed-srv6-np-00> [retrieved on 20190722]
- LI Y XIA D DHODY Z LI HUAWEI TECHNOLOGIES C: "SRH TLV Processing Programming; draft-li-spring-srh-tlv-processing-programming-00.txt", 8 December 2020 (2020-12-08), pages 1 - 10, XP015143256, Retrieved from the Internet <URL:https://tools.ietf.org/html/draft-li-spring-srh-tlv-processing-programming-00> [retrieved on 20201208]

## Description

### TECHNICAL FIELD

This application relates to the communication field, and in particular, to a packet processing method, a network node, and a system.

### BACKGROUND

Segment routing (segment routing, SR) is a protocol designed based on a source routing concept to forward a data packet on a network, and supports explicitly specifying a forwarding path of a data packet on a source node. When the SR is deployed on an Internet Protocol version 6 (Internet Protocol version 6, IPv6) data plane, the SR is referred to as segment routing over IPv6 (segment routing over IPv6, SRv6). The SRv6 extends a segment routing header (segment routing header, SRH) based on the IPv6. The SRH includes a segment list (SID List). The SID list includes a plurality of segment identifiers (segment identifiers, SIDs) that are sequentially arranged, where the plurality of segment identifiers separately represent a plurality of segments. Each segment is an instruction or instruction set for packet processing. The SID list may also be referred to as a segment list. The SRH is encapsulated in a packet, and bears, by using the segment list in the SRH, a procedure of forwarding and processing the packet on an SRv6 network. The SRH may carry one or more type-length-values (type-length-values, TLVs), to implement more network functions. For example, an OAM function is implemented by carrying an in-situ Operations, Administration, and Maintenance (in-situ Operations, Administration, and Maintenance, IOAM) TLV in the SRH.

A node having an SR function at an ingress of the SRv6 network is referred to as a head node or an ingress node (ingress node), and another node having the SR function is referred to as a segment endpoint node (segment endpoint node). For any segment endpoint node in the SRv6 network, when the segment endpoint node obtains a packet that is sent by the head node or another segment endpoint node and that includes an SRH, the segment endpoint node parses the packet, and determines one or more TLVs included in the SRH. For each TLV, the segment endpoint node determines, according to a locally configured TLV processing policy, whether to process the TLV. If the segment endpoint node needs to process the TLV, the segment endpoint node performs a subsequent operation based on an indication of the TLV. If the segment endpoint node does not need to process the TLV, the segment endpoint node does not need to perform a subsequent operation based on an indication of the TLV.

In the foregoing method, to enable the segment endpoint node to determine, according to the locally configured TLV processing policy, whether to process the TLV included in the SRH, a network management device needs to configure a TLV processing policy for each segment endpoint node. As a result, packet processing flexibility is relatively low.

The document "IS-IS Extensions for Segment Routing" by S. Previdi et al. (Internet-Draft, https://datatracker.ietf.org/doc/pdf/draft-ietf-isi-segment-routing-extensions -25) discloses prefix segment identifiers for segment routing, the prefix segment identifiers comprising an octet field of flags that trigger pre-defined actions.

Further background art may be found in the article "Segment Routing Architecture" by C. Filsfils et al. (RFC8402.TXT, IETF), in the article "IPv6 Segment Routing Header (SRH)" by C. Filsfils et al. (IETF, https://tools.ietf.org/html/draft-ietf-6man-segment-routing-header-26) and in the article "Compressed SRv6 Network Programming" by Z. Li et al. (IETF, https://tools.ietf.org/html/draft-li-spring-compressed-srv6-np-00).

### SUMMARY

This application provides a packet processing method, a network node, and a system, to resolve a technical problem of low flexibility in processing a TLV in a packet in a conventional technology.

According to a first aspect, an embodiment of this application provides a packet processing method. In the method, a first network node receives a packet sent by a second network node. The packet includes one or more TLVs that need to be processed by a network node. The packet further includes indication information, and the indication information indicates that at least one network node needs to process at least one TLV in the one or more TLVs. The first network node determines, based on the indication information, that the first network node needs to process at least one TLV in the one or more TLVs. The first network node determines, based on the indication information, a TLV that needs to be processed by the first network node, and the first network node processes the TLV that needs to be processed by the first network node. According to the foregoing technical solution, the network node may determine, based on the indication information included in the received packet, whether the network node needs to process the TLV in the packet. If the network node needs to process the TLV in the packet, the network node further determines, based on the indication information, the TLV/TLVs that needs/need to be processed in the packet, and then process the TLV/TLVs that needs/need to be processed. In this way, the network nodes that need to process the TLVs in the packet and the TLVs that need to be processed by the network nodes in the packet can be flexibly controlled based on an actual situation of a network topology and by using the indication information of the packet, thereby improving packet processing flexibility.

The indication information includes one or more indication entries, each indication entry includes a first field and a second field, the first field is used to identify a network node that needs to process at least one TLV in the one or more TLVs, and the second field is used to identify a TLV that needs to be processed by the network node identified by the first field. Each indication entry corresponds to a network node that needs to process the TLV in the packet, and the network node may be flexibly specified, in a manner of including the indication entry in the indication information, to process the TLV in the packet. For example, when a new network node that needs to process the TLV in the packet is added to a network, an indication entry corresponding to the network node may be added to the indication information.

In a possible design, the second field is a bitmap (Bitmap) field, and an index, based on a sequence from a lower order to a higher order of the bitmap field or a sequence from a higher order to a lower order of the bitmap field, of a bit (bit) whose value is 1 in the bitmap field corresponds to a sequence number of the TLV that needs to be processed by the network node identified by the first field. For example, the index of the bit whose value is 1 in the bitmap field is an ordinal number, based on the sequence from the lower order to the higher order of the bitmap field, of the bit whose value is 1. For example, based on the sequence from the lower order to the higher order of the bitmap field in the packet, when the 1^{st} bit of the bitmap field is set to 1, the network node needs to process the 1^{st} TLV in the one or more TLVs. When the 1^{st} bit and the 3^{rd} bit of the bitmap field are separately set to 1, the network node needs to separately process the 1^{st} TLV and the 3^{rd} TLV in the plurality of TLVs.

In a possible design, when the first network node determines that the one or more indication entries include a specific indication entry, and a value of a first field of the specific indication entry corresponds to a value of a segment left (segment left, SL) in an SRH of the packet, the first network node determines that the first network node needs to process at least one TLV in the one or more TLVs.

In a possible design, that a value of a first field of the specific indication entry corresponds to a value of an SL in an SRH of the packet is specifically that the value of the first field is equal to the value of the SL in the SRH, or that the value of the first field is equal to a sum of the value of the SL in the SRH and n. To be specific, the value of the first field=SL+n, where n is an integer greater than or equal to 1.

In a possible design, the first field includes a first subfield and a second subfield, and that the first network node determines, based on the indication information, that the first network node needs to process at least one TLV in the one or more TLVs includes:

When the first network node determines that the one or more indication entries include a specific indication entry, a value of a first subfield of the specific indication entry corresponds to a value of an SL in an SRH of the packet, and a value of a second subfield corresponds to a value of a compressed segment identifier left in the SRH of the packet, the first network node determines that the first network node needs to process at least one TLV in the one or more TLVs. The packet including a compressed SID may be processed by including the compressed segment identifier left in the indication entry, so that the method is applied to more scenarios. In an example, the compressed segment identifier left may be a compressed SID left (compressed SID left, CL).

In a possible design, that a value of a first subfield of the specific indication entry corresponds to a value of an SL in an SRH of the packet is specifically that the value of the first subfield is equal to the value of the SL in the SRH, or that the value of the first subfield is equal to a sum of the value of the SL in the SRH and n. To be specific, the value of the first subfield=SL+n, where n is an integer greater than or equal to 1. That a value of a second subfield corresponds to a value of a compressed segment identifier left in the SRH of the packet is specifically that the value of the second subfield is equal to the value of the compressed segment identifier left in the SRH, or the value of the second subfield is equal to a sum of the value of the compressed segment identifier left in the SRH and n. To be specific, the value of the second subfield=the compressed segment identifier left+n, where n is an integer greater than or equal to 1.

In a possible design, when the first network node determines that the one or more indication entries include a specific indication entry, and a value of a first field of the specific indication entry is equal to an identifier of the first network node, the first network node determines that the first network node needs to process at least one TLV in the one or more TLVs. For example, when the identifier of the first network node is 1:: 1, and the value of the first field of the specific indication entry is also 1::1, the first network node determines that the first network node needs to process at least one TLV in the one or more TLVs.

In a possible design, that the first network node determines, based on the indication information, a TLV that needs to be processed by the first network node includes: The first network node determines that a TLV identified by a second field of the specific indication entry is the TLV that needs to be processed by the first network node.

In a possible design, the indication information further includes a third field, and the third field is used to identify a quantity of network nodes that need to process the TLV. For example, when there are four network nodes that need to process the TLV, a value of the third field is 4. Optionally, the third field may further be used to identify a quantity of indication entries included in the indication information. For example, when the indication information includes three indication entries, the value of the third field is 3.

In a possible design, the first network node determines a position of the specific indication entry in the packet based on the first field, the second field, and the third field.

In a possible design, the first network node determines the position of the specific indication entry in the packet according to the following formula: start position of the specific indication entry in the packet=end position of the third field in the packet+(value of the third field-1)*(length of the first field+length of the second field).

In a possible design, the first network node subtracts 1 from the value of the third field in the packet, to obtain an updated packet, and sends the updated packet. The value of the third field is subtracted by 1, so that the network node that receives the updated packet can correctly identify whether the network node needs to process the TLV in the packet.

The indication information is included in the SRH of the packet in a TLV manner.

According to a second aspect, an embodiment of this application provides a packet processing method. The method includes: A second network node obtains a first packet; the second network node adds, to the first packet, indication information and one or more TLVs that need to be processed by a network node on a forwarding path of the first packet, to generate a second packet, where the indication information indicates that at least one network node needs to process at least one TLV in the one or more TLVs, and the indication information is further used to indicate a TLV that needs to be processed by the at least one network node. According to the foregoing technical solution, the second network node controls, by including the indication information in the packet, which network node needs to process the TLV in the packet. After receiving the packet, the first network node determines, based on the indication information, whether the first network node needs to process the TLV included in the packet. If determining that the first network node needs to process the TLV included in the packet, the first network node further determines, based on the indication information, a TLV or TLVs that needs/need to be processed in the packet, so that packet processing flexibility is improved, and a controller does not need to separately configure a TLV processing policy for each network node.

The indication information includes one or more indication entries, each indication entry includes a first field and a second field, the first field is used to identify a network node that needs to process at least one TLV in the one or more TLVs, and the second field is used to identify a TLV that needs to be processed by the network node identified by the first field.

In a possible design, the indication information further includes a third field, and the third field is used to identify a quantity of network nodes that need to process the TLV. Optionally, the third field may further be used to identify a quantity of indication entries included in the indication information.

In a possible design, the second field is a bitmap field. The indication information further includes a fourth field, and the fourth field is used to identify a length of the second field. A length of the bitmap field may be adjusted based on a quantity of TLVs that need to be processed by the network node. For example, when a quantity of the one or more TLVs is 1 to 8, the length of the bitmap field may be 1 byte (8 bits). When a quantity of the one or more TLVs is 9 to 16, the length of the bitmap field may be 2 bytes.

In a possible design, the indication information is included in a processing rule (Processing Rule, PR) TLV, and that the second network node adds, to the first packet, indication information includes:

The second network node adds an SRH to the first packet, where the SRH includes the PR TLV.

In a possible design, the first packet further includes an application identifier (application identifier, APP ID) or other application-related information. The second network node determines the forwarding path of the first packet based on the APP ID or the other application-related information, and determines a segment list corresponding to the forwarding path. Then, the second network node adds, to the first packet, the one or more TLVs that need to be processed by the network node on the forwarding path, to generate the second packet.

In a possible design, the second network node determines the APP ID or the other application-related information of the first packet based on attribute information of the first packet, determines the forwarding path of the first packet based on the APP ID or the other application-related information, and determines the segment list corresponding to the forwarding path. Then, the second network node adds, to the first packet, the one or more TLVs that need to be processed by the network node on the forwarding path, to generate the second packet.

According to a third aspect, an embodiment of this application provides a network node used in a network system including a plurality of network nodes. The plurality of network nodes include a first network node and a second network node, and the network node is the first network node. The first network node includes a processor and a network interface. The network interface is configured to receive and send a packet. The processor is configured to perform the method in any one of the first aspect or the possible designs of the first aspect.

In a possible design, the first network node further includes a memory. The memory may be configured to store instructions or program code, and the processor is configured to invoke the instructions or program code in the memory, to perform the method in any one of the first aspect or the possible designs of the first aspect.

According to a fourth aspect, an embodiment of this application provides a network node used in a network system including a plurality of network nodes. The plurality of network nodes include a first network node and a second network node, and the network node is the second network node. The second network node includes a processor and a network interface. The network interface is configured to receive and send a packet. The processor is configured to perform the method in any one of the second aspect or the possible designs of the second aspect.

In a possible design, the second network node further includes a memory. The memory may be configured to store instructions or program code, and the processor is configured to invoke the instructions or program code in the memory, to perform the method in any one of the second aspect or the possible designs of the second aspect.

### BRIEF DESCRIPTION OF DRAWINGS

FIG. 1 is a schematic diagram of an application scenario of a packet processing method according to an embodiment of this application;
FIG. 2A is a schematic diagram of a format of an SRH according to an embodiment of this application;
FIG. 2B is another schematic diagram of a format of an SRH according to an embodiment of this application;
FIG. 3 is a schematic diagram of a format of an SID according to an embodiment of this application;
FIG. 4A is a schematic diagram of a structure of a device according to an embodiment of this application;
FIG. 4B is a schematic diagram of a structure of a device according to an embodiment of this application;
FIG. 5 is a schematic flowchart of a packet processing method according to an embodiment of this application;
FIG. 6A is a schematic diagram of a format of a PR TLV according to an embodiment of this application;
FIG. 6B is another schematic diagram of a format of a PR TLV according to an embodiment of this application;
FIG. 7 is another schematic diagram of a format of an SRH according to an embodiment of this application;
FIG. 8 is a schematic flowchart of a packet processing method according to an embodiment of this application;
FIG. 9A is a schematic diagram of an application scenario of a packet processing method according to an embodiment of this application;
FIG. 9B is a schematic diagram of an application scenario of a packet processing method according to an embodiment of this application;
FIG. 10A is a schematic flowchart of a packet processing method according to an embodiment of this application;
FIG. 10B is a schematic flowchart of a packet processing method according to an embodiment of this application;
FIG. 11A is a schematic diagram of a format of a PR TLV according to an embodiment of this application;
FIG. 11B is another schematic diagram of a format of a PR TLV according to an embodiment of this application;
FIG. 12 is a schematic diagram of a structure of a network node according to an embodiment of this application;
FIG. 13 is a schematic diagram of a structure of a network node according to an embodiment of this application; and
FIG. 14 is a schematic diagram of a packet processing system according to an embodiment of this application.

### DETAILED DESCRIPTION OF EMBODIMENTS

The following describes embodiments of this application with reference to the accompanying drawings.

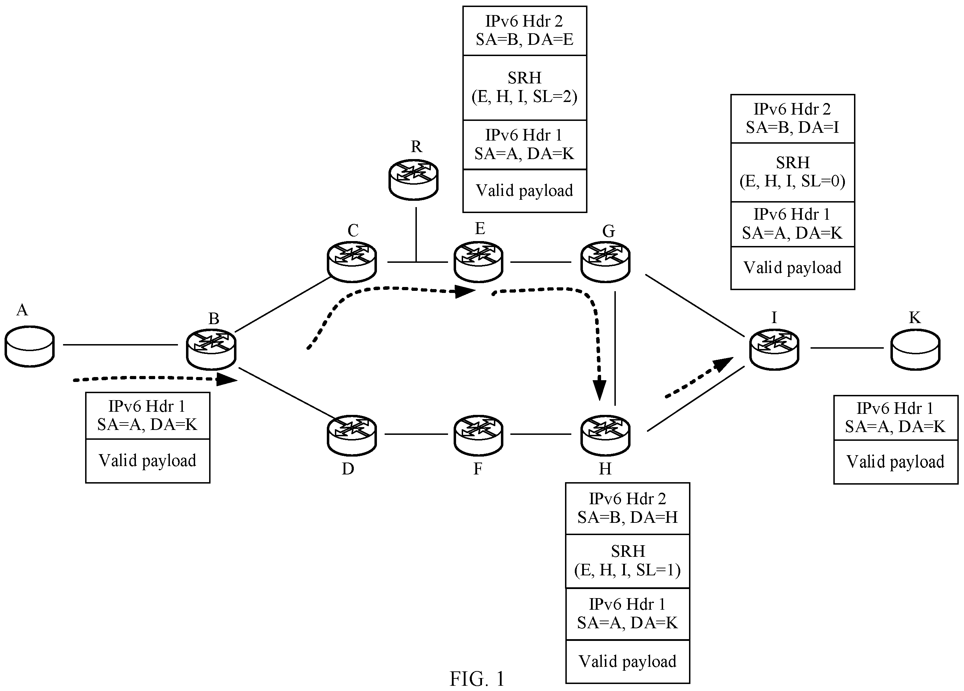

FIG. 1 is a schematic diagram of an application scenario of a packet processing method according to an embodiment of this application. As shown in FIG. 1, the scenario includes network nodes A, B, C, D, E, F, G, H, I, K, and R. The network node in this embodiment of this application may be referred to as a node for short.

A node having an SR function needs to advertise an SID of the node to another node in a network in advance, and can forward or process a packet based on an SRH. In an SRv6 technology, the SID advertised by the node may be an IPv6 address of the node. The network node in this embodiment of this application may be a router, a switch, or another network device, and the node A and the node K may alternatively be hosts or user access devices. In addition, a network formed in the scenario shown in FIG. 1 may also be referred to as an SRv6 network.

In an example, a role of each node may be preconfigured. For example, a controller in the network may be used to configure the node B as a head node of a segment routing network, and configure the nodes R, E, F, H, and I as segment endpoint nodes in the segment routing network. After the role of each node is configured, each node may correspondingly process a packet based on the configured role when receiving the packet.

Using the scenario shown in FIG. 1 as an example, the node B receives a packet sent by the node A. The packet is a packet that is based on an IPv6, and includes an IPv6 packet header (header, Hdr) and a valid payload (payload). A simplified format of the IPv6 packet header is shown as an IPv6 Hdr 1 in FIG. 1, and the IPv6 packet header may be referred to as a first IPv6 packet header in this embodiment of this application. A source address (source address, SA) in the IPv6 packet header is an address of the node A, and a destination address (destination address, DA) is an address of the node K. Because the node B is the head node of the segment routing network, the node B needs to add, to the packet header, a segment list corresponding to a packet forwarding path. The segment list includes an SID on the forwarding path, for example, a node SID or a link SID. The node B may determine the forwarding path of the packet in the segment routing network, and then generate the segment list corresponding to the forwarding path. Optionally, the controller calculates the forwarding path based on a service requirement, generates the segment list corresponding to the forwarding path, and then sends the segment list to the node B. It is assumed that the nodes B, C, E, G, H, and I are passed through on the forwarding path. The nodes E, H, and I are nodes having the SR function, and three links formed among the three nodes form a segment routing link of the packet in the segment routing network. Therefore, the three nodes may also be referred to as segment endpoint nodes on the forwarding path of the packet in the segment routing network. The node B may add an SRH and a new IPv6 packet header to the packet. A simplified format of the SRH is shown as an SRH in FIG. 1, and a simplified format of the new IPv6 packet header is shown as an IPv6 Hdr 2 in FIG. 1. The new IPv6 packet header may be referred to as a second IPv6 packet header in this embodiment of this application. After the second IPv6 packet header is added to the packet, the first IPv6 packet header may also be considered as a part of the valid payload of the packet. The SRH includes the segment list, and the segment list includes addresses of the nodes E, H, and I. Optionally, the SRH may alternatively include the address of the node K. A destination address of the second IPv6 packet header is the address of the node E, and a source address is an address of the node B. The node B sends, to the node C, the packet to which the SRH and the second IPv6 packet header are added. The node C determines that the destination address of the second IPv6 packet header of the packet is not an address of the node C. Therefore, the node C directly searches a forwarding information table based on the destination address in the second IPv6 packet header of the packet, and sends the packet to the node E. After receiving the packet, the node E determines that the destination address in the second IPv6 packet header is the address of the node E, parses the SRH of the packet, and updates the destination address in the second IPv6 packet header by using an SID next to an SID that is of the node E and that is in the segment list in the SRH. That is, the node E updates the destination address in the second IPv6 packet header by using the address of the node H, and forwards an updated packet to the node H through the node G. A manner in which the node G processes the packet is similar to a manner in which the node C processes the packet. The node G directly searches the forwarding information table based on the destination address in the second IPv6 packet header of the packet, and performs packet forwarding. After the node H receives the packet, because the destination address in the second IPv6 packet header is the address of the node H, the node H parses the SRH of the packet, and updates the destination address in the second IPv6 packet header by using an SID next to the SID that is of the node H and that is in the segment list in the SRH. That is, the node H updates the destination address in the second IPv6 packet header by using the address of the node I, and forwards an updated packet to the node I. After receiving the packet, the node I determines, based on the forwarding path, that the SID of the node I is the last SID in the segment list. In this case, the node I may delete the SRH and the second IPv6 packet header in the packet, and perform packet forwarding by using the first IPv6 packet header. Because the destination address of the first IPv6 packet header is the address of the node K, the node I sends the packet to the node K. In the foregoing manner, the node A may send the packet to the node K by using the SRv6 network.

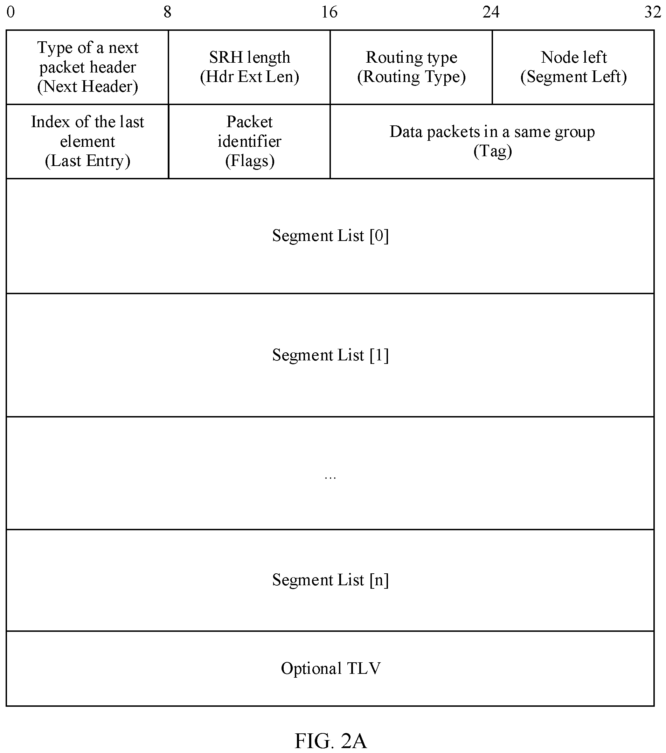

FIG. 2A is a schematic diagram of a format of an SRH according to an embodiment of this application. As shown in FIG. 2A, the SRH includes a field (Next Header) used to indicate a type of a next packet header, a field (Hdr Ext Len) used to indicate an SRH header length, and a field (Routing Type) used to indicate a routing type. The SRH further includes a field (Segment Left, SL) used to indicate a quantity of segment endpoint nodes that the packet further needs to pass through. The field may also be referred to as a node left field. The SRH further includes a field (Last Entry) used to indicate an index of the last element in a segment list, a field (Flags) used to indicate an identifier of a data packet, and a field (Tag) used to indicate data packets in a same group. The SRH further includes the segment list, where the segment list includes a segment list [0], a segment list [1], ..., and a segment list [n]. Each element in the segment list corresponds to one SID, each SID may be an IPv6 address or a part of the IPv6 address, and each SID is used to identify a network node or a link.

In addition, as shown in FIG. 2A, the SRH further includes an optional TLV (optional type-length-value). By using the optional TLVs, the SRH may implement more functions, for example, may implement fault diagnosis detection and IOAM.

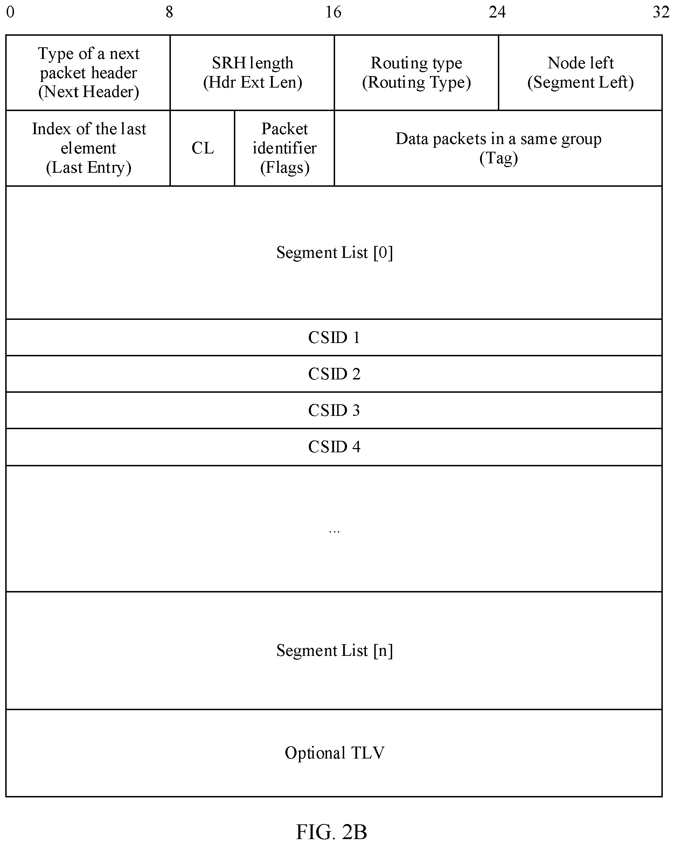

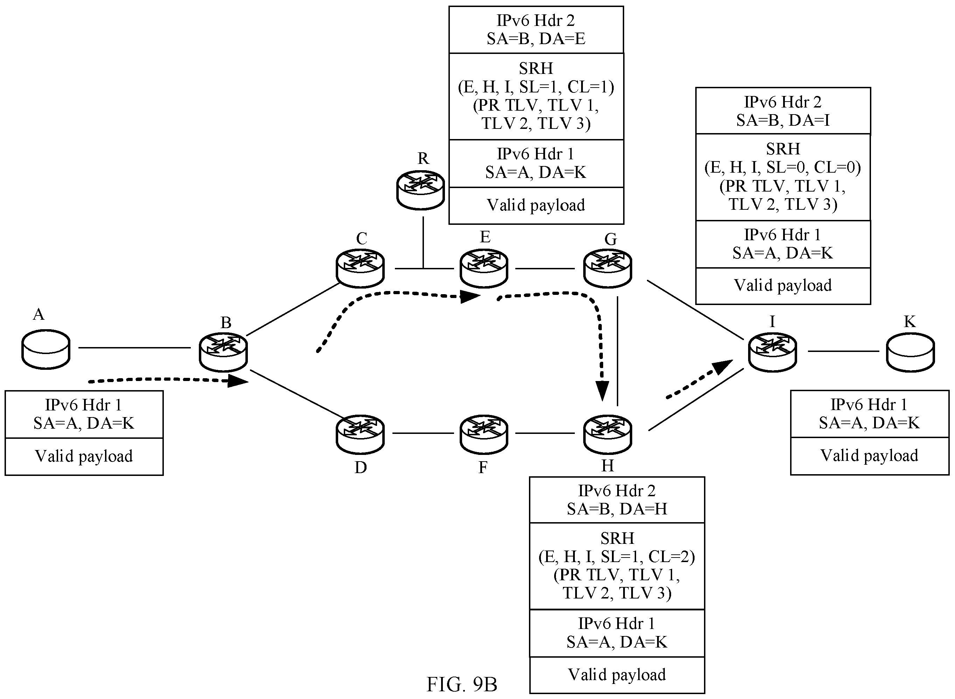

FIG. 2B is another schematic diagram of a format of an SRH according to an embodiment of this application. A difference between the SRH shown in FIG. 2B and the SRH shown in FIG. 2A lies in that one or more elements in the segment list in FIG. 2A may include SIDs of a plurality of nodes in FIG. 2B. For example: a position of a segment list [1] in FIG. 2B includes a CSID 1, a CSID 2, a CSID 3, and a CSID 4. The CSID 1, CSID 2, CSID 3, and CSID 4 are separately an SID of one node. An element of a 128-bit segment list in FIG. 2A may store SIDs of a plurality of nodes in FIG. 2B. In this case, the SID may be a compressed SID, and a quantity of bits occupied by each compressed SID is less than 128 bits. For example, in FIG. 2B, each compressed SID occupies 32 bits. In addition, in FIG. 2B, the SRH further includes a compressed SID left (compressed SID left, CL) field, and the CL field is used to identify a position of a compressed SID in a segment list that includes the compressed SID. For example, referring to FIG. 9B, after receiving a packet, a node E determines that a destination address of an IPv6 header of the packet is an address of the node E, and further determines that a value of an SL field in an SRH is equal to 1. In this case, the node E obtains, from a segment list [1], an SID of a next node in a packet forwarding process. Because the node E knows that an SID of the node E is compressed, the SID of the next node on a packet forwarding path needs to be determined based on a value of a CL field. Specifically, an SID of a next-hop node may be determined based on the value of the CL field. For example, when the value of the CL field is 1, the 1^{st} CSID in the segment list [1] is obtained, that is, the SID of the next-hop node is determined as a CSID 1. An SRH including a compressed SID may be referred to as a compressed routing header (compressed routing header, CRH), or may be referred to as a compressed segment routing header (compress segment routing header, C-SRH).

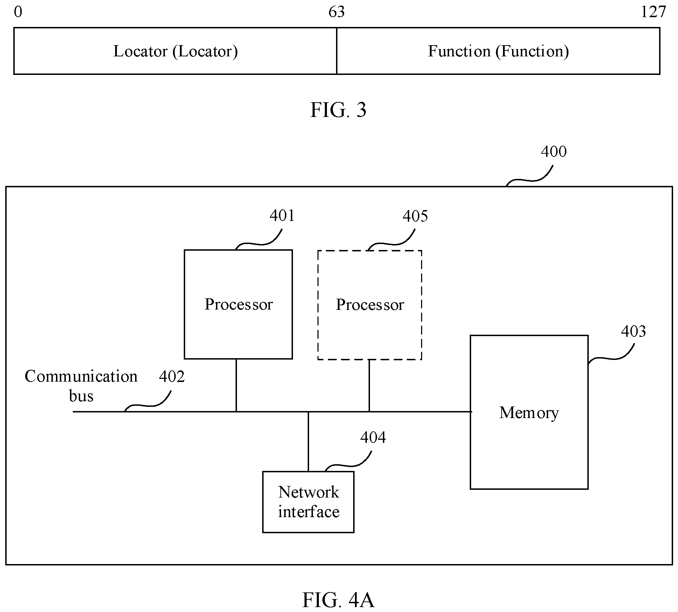

In some embodiments, as shown in FIG. 3, each SID is a 128-bit IPv6 address. Each SID may include two parts: one part is a locator (Locator) field, and the other part is a function (Function) field. The locator field occupies a high bit of 128 bits. For example, the function field occupies the 64^{th} bit to the 127^{th} bit in the 128 bits, and the locator field occupies the 0^{th} bit to the 63^{rd} bit in the 128 bits. The locator field is used to route and forward a packet, and the function field is used to indicate a node corresponding to the SID to perform a specific function.

FIG. 4A is a schematic diagram of a structure of a device 400 according to an embodiment of this application. The node in FIG. 1 may be implemented by using the device shown in FIG. 4A. Refer to FIG. 4A. The device 400 includes at least one processor 401, a communication bus 402, and at least one network interface 404. Optionally, the device 400 may further include a memory 403.

The processor 401 may be a general-purpose central processing unit (central processing unit, CPU), an application-specific integrated circuit (application-specific integrated circuit, ASIC), or one or more integrated circuits (integrated circuits, ICs) configured to control program execution of solutions of this application. The processor may be configured to process a received packet, to implement the packet processing method provided in the embodiments of this application.

For example, when the head node in FIG. 1 is implemented by using the device shown in FIG. 4A, the processor may be configured to add, to a received packet, an SRH that includes a TLV that needs to be processed by a network node, so that a subsequent segment endpoint node may process the TLV. For a specific function implementation, refer to a processing part of the corresponding node in the method embodiment. For another example, when the segment endpoint node in FIG. 1 is implemented by using the device shown in FIG. 4A, the processor may be configured to obtain a TLV from a received packet that carries an SRH, and process the TLV. For specific a function implementation, refer to a processing part of the segment endpoint node in the method embodiment.

The communication bus 402 is configured to transmit information among the processor 401, the network interface 404, and the memory 403.

The memory 403 may be a read-only memory (read-only memory, ROM) or another type of static storage device that may store static information and instructions. The memory 403 may alternatively be a random access memory (random access memory, RAM) or another type of dynamic storage device that may store information and instructions, or may be a compact disc read-only memory (compact disc read-only memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of an instruction or a data structure and can be accessed by a computer, but is not limited thereto. The memory 403 may exist independently, and is connected to the processor 401 by using the communication bus 402. Alternatively, the memory 403 may be integrated with the processor 401.

Optionally, the memory 403 is configured to store program code or instructions for executing the solutions of this application, and the processor 401 controls execution. The processor 401 is configured to execute the program code or instructions stored in the memory 403. The program code may include one or more software modules. Optionally, the processor 401 may alternatively store the program code or instructions for executing the solutions of this application. In this case, the processor 401 does not need to read the program code or instructions from the memory 403.

The network interface 404 may be an apparatus such as a transceiver, and is configured to communicate with another device or a communication network. The communication network may be an Ethernet, a radio access network (RAN), a wireless local area network (wireless local area network, WLAN), or the like. In this embodiment of this application, the network interface 404 may be configured to receive a packet sent by another node in a segment routing network, or send a packet to another node in a segment routing network. The network interface 404 may be an Ethernet (Ethernet) interface, a fast Ethernet (fast Ethernet, FE) interface, a gigabit Ethernet (gigabit Ethernet, GE) interface, or the like.

In a specific implementation, in an embodiment, the device 400 may include a plurality of processors, for example, the processor 401 and a processor 405 that are shown in FIG. 4A. Each of the processors may be a single-core (single-CPU) processor, or may be a multi-core (multi-CPU) processor. The processor herein may be one or more devices, circuits, and/or processing cores configured to process data (for example, computer program instructions).

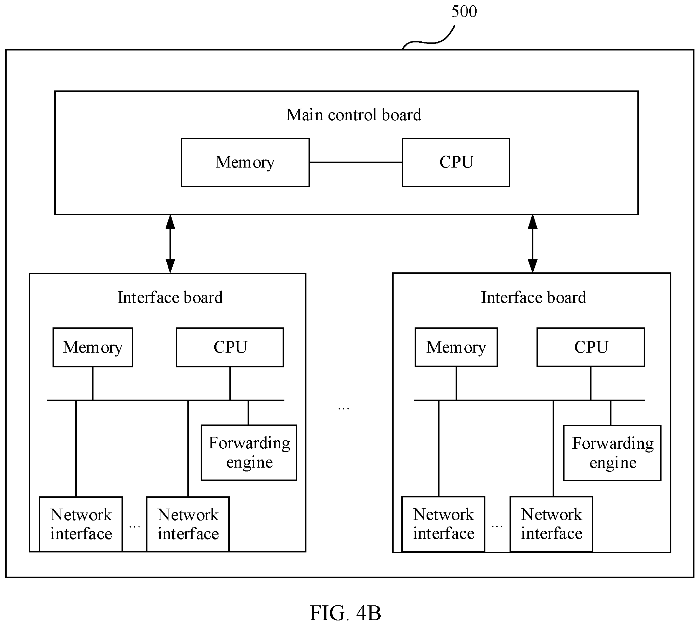

FIG. 4B is a schematic diagram of a structure of a device 500 according to an embodiment of this application. The node in FIG. 1 may be implemented by using the device shown in FIG. 4B. Refer to the schematic diagram of the structure of the device shown in FIG. 4B. The device 500 includes a main control board and one or more interface boards. The main control board is in communication connection to the interface board. The main control board is also referred to as a main processing unit (main processing unit, MPU) or a route processor card (route processor card). The main control board includes a CPU and a memory, and is responsible for controlling and managing each component in the device 500, including route computation, and device management and maintenance functions. The interface board is also referred to as a line processing unit (line processing unit, LPU) or a line card (line card), and is configured to receive and send a packet. In some embodiments, the main control board communicates with the interface board by using a bus, or the interface boards communicate with each other by using a bus. In some embodiments, the interface boards communicate with each other by using a switching board. In this case, the device 500 also includes the switching board. The switching board is in communication connection to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is separately in communication connection to the memory, the forwarding engine, and the interface card. The memory is configured to store a forwarding information table. The forwarding engine is configured to forward a received packet based on the forwarding information table stored in the memory. If a destination address of the received packet is an Internet Protocol (Internet Protocol, IP) address of the device 500, the forwarding engine sends the packet to the CPU of the main control board or the CPU of the interface board for processing. If a destination address of the received packet is not an IP address of the device 500, the forwarding engine searches the forwarding information table based on the destination address. If a next hop and an outbound interface that correspond to the destination address are found from the forwarding information table, the forwarding engine forwards the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform a function of the forwarding engine, for example, implementing software forwarding based on a general-purpose CPU, so that no forwarding engine is required in the interface board. In some embodiments, the forwarding engine may be implemented by using an application-specific integrated circuit (application-specific integrated circuit, ASIC) or a field programmable gate array (field programmable gate array, FPGA). In some embodiments, the memory that stores the forwarding information table may alternatively be integrated into the forwarding engine, and is used as a part of the forwarding engine.

As shown in FIG. 1, the head node in the segmented routing network adds an SRH to a received packet, where the SRH includes one or more TLVs that need to be processed by a network node on the packet forwarding path. When receiving the packet that includes the SRH, each node in the segmented routing network first determines, based on indication information in the packet, whether to process the TLV included in the SRH, and determining that one or more of the TLVs included in the SRH need to be processed, further determines a TLV or TLVs that needs/need to be processed. After the specific TLV that needs to be processed is determined, the TLV that needs to be processed is processed. In this embodiment of this application, processing the TLV refers to adding information to the TLV, or performing a corresponding operation based on content in the TLV. The following describes the foregoing process by using an embodiment.

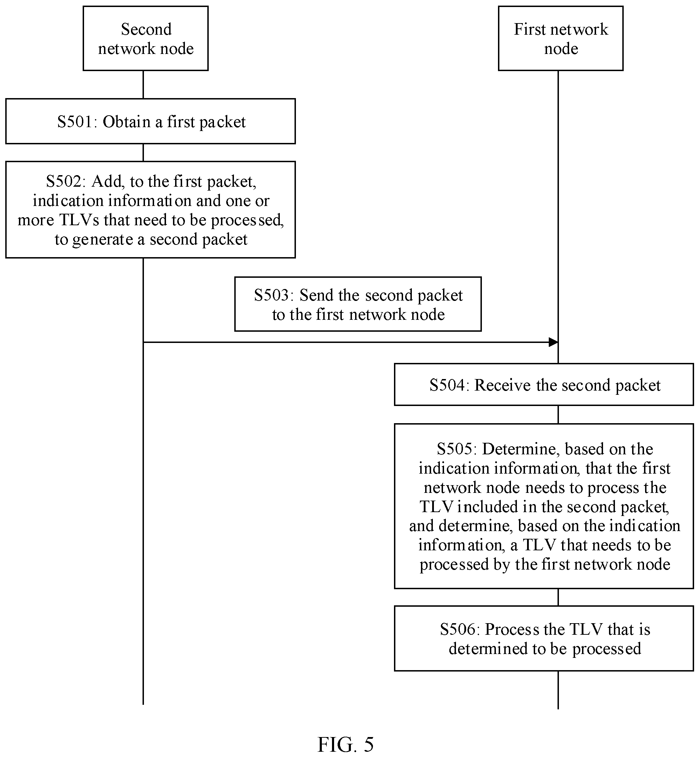

With reference to the application scenario shown in FIG. 1, referring to FIG. 5, an embodiment of this application provides a packet processing method. As shown in FIG. 5, the method includes the following steps.

S501: A second network node obtains a first packet. The second network node may be the node B in the scenario shown in FIG. 1. The second network node may obtain the first packet in two manners.

In a first manner, the second network node receives the first packet sent by the node A in FIG. 1.

In a second manner, the second network node generates the first packet.

S502: The second network node adds, to the first packet, indication information and one or more TLVs that need to be processed by a network node on a forwarding path of the first packet, to generate a second packet. The indication information indicates that at least one network node needs to process at least one TLV in the one or more TLVs. The indication information is further used to indicate a TLV or TLVs that needs/need to be processed by the at least one network node in the one or more TLVs. Optionally, the second network node determines the forwarding path of the first packet based on related information of the first packet, and then determines, based on a function or position of the network node on the forwarding path or based on an attribute of the packet, the one or more TLVs that need to be processed by the network node. The related information of the first packet may be one element or a combination of a plurality of elements in a quintuple of the first packet. For example, the second network node determines the forwarding path based on a destination address of the first packet.

The indication information includes one or more indication entries, and each indication entry includes a first field and a second field. The first field is used to identify a network node that needs to process at least one TLV in the one or more TLVs, and the second field is used to identify a TLV that needs to be processed by the network node identified by the first field.

In an example, the second network node stores a TLV policy (Policy). The TLV policy includes a correspondence between the packet attribute and the TLV that needs to be added to the packet. For example, the second network node receives the first packet from a user side device (for example, the node A in FIG. 1), matches the TLV policy based on the packet attribute of the first packet, and then adds the TLV in the TLV policy to the first packet, to generate the second packet. The quintuple of the packet includes the destination address, a source address, a destination port number, a source port number, and a protocol number. The packet attribute may be any one element or a combination of a plurality of elements in the quintuple of the packet. For example, the packet attribute is the destination address of the packet, or the packet attribute is a combination of the destination address and the source address of the packet.

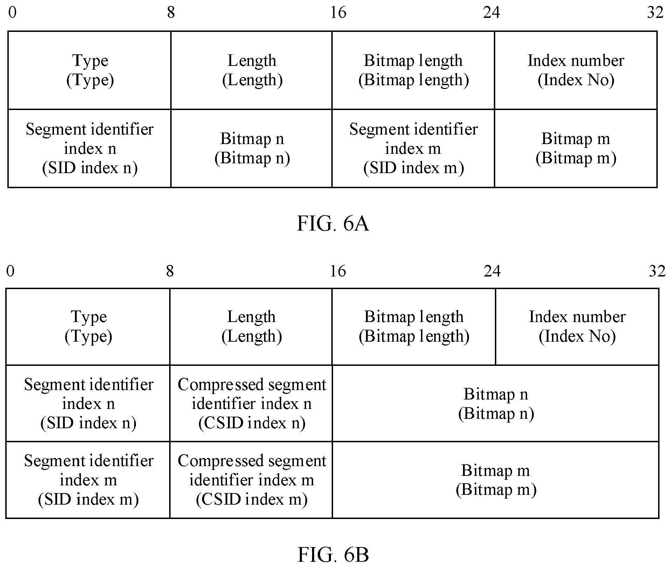

In an example, the indication information is included in an SRH of the packet in a TLV manner, and the TLV may be referred to as a PR TLV. FIG. 6A is a schematic diagram of a packet format of indication information according to an embodiment of this application. A PR TLV thereof includes:
a type (Type) field, used to indicate that a type of the TLV is a PR TLV;
a length (Length) field, used to indicate a length of a data part of the PR TLV;
a bitmap length (Bitmap length) field, used to identify a length of a bitmap field in the PR TLV, for example, a length of bytes occupied by a bitmap n field or a length of bytes occupied by a bitmap m field;
an index number (Index No) field, used to identify a quantity of nodes that need to process a TLV in a packet, or identify a quantity of indication entries included in the PR TLV;
a segment identifier index n (SID index n) field, used to identify a node that needs to process the TLV in the packet, where a value of the segment identifier index n field corresponds to an SL field corresponding to the node;
a bitmap n (Bitmap n) field, used to identify a TLV that needs to be processed by the node corresponding to the SID index n field;
a segment identifier index m (SID index m) field, used to identify another node that needs to process the TLV in the packet, and a value of the segment identifier index m corresponds to the SL field corresponding to the node; and
a bitmap m (Bitmap m) field, used to identify a TLV that needs to be processed by the network node corresponding to the SID index m field.

In a PR TLV format shown in FIG. 6A, a combination of the SID index field and the bitmap field may be used as an indication entry in the indication information. For example, a combination of the SID index n field and the bitmap n field may be used as an indication entry of the indication information, and a combination of the SID index m field and the bitmap m field may be used as another indication entry of the indication information. The indication entry may also be referred to as a processing rule entry (Processing Rule Entry). The SID index field is a first field in the indication entry, and is used to identify a node that needs to process the TLV in the packet. The bitmap field is a second field in the indication entry, and is used to identify a TLV that needs to be processed by the node identified by the first field. The Index No field may be used as a third field of the indication information, and is used to identify a quantity of network nodes that need to process the TLV in the packet. The bitmap length field may be used as a fourth field of the indication information, and is used to identify a length of the second field in the indication entry.

FIG. 6B is another schematic diagram of a packet format of indication information according to an embodiment of this application. Meanings of a type field, a length field, a bitmap length field, an Index No field, an SID index field, and a bitmap field thereof are the same as those of the corresponding fields in FIG. 6A. A compressed segment identifier index (CSID Index) field in FIG. 6B is used to determine, together with the SID index field, a node that needs to process a TLV in a packet. In this case, a combination of the SID index field, the CSID field, and the bitmap field may be used as an indication entry of the indication information. For example, a combination of an SID index n field, a CSID index n field, and a bitmap n field may be used as an indication entry of the indication information, and a combination of an SID index m field, a CSID index m field, and a bitmap m field may be used as another indication entry of the indication information.

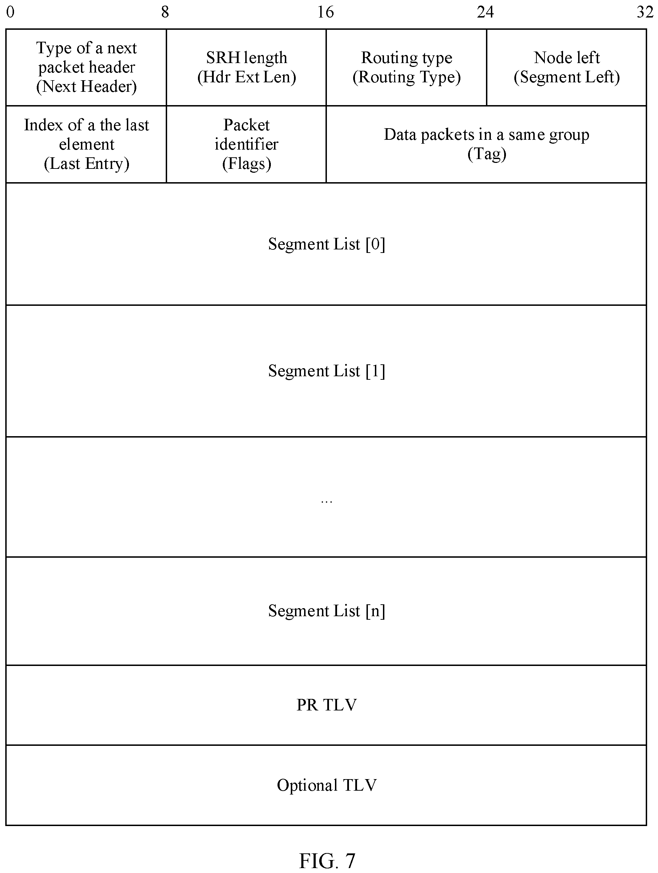

FIG. 7 is a schematic diagram of a format of an SRH including a PR TLV according to an embodiment of this application. The PR TLV is located between a segment list in the SRH and an optional TLV that needs to be processed by a node.

S503: The second network node sends the second packet to a first network node on the forwarding path.

S504: The first network node receives the second packet sent by the second network node.

S505: The first network node determines, based on the indication information, that the first network node needs to process at least one TLV in the one or more TLVs; and determines, based on the indication information, a TLV that needs to be processed by the first network node, where the TLV that needs to be processed by the first network node may include one or more TLVs.

In an example, when the first network node determines that the one or more indication entries include a specific indication entry, and a value of a first field of the specific indication entry corresponds to a value of an SL field in the SRH of the packet, the first network node determines that the first network node needs to process at least one TLV in the one or more TLVs. That a value of a first field of the specific indication entry corresponds to a value of an SL field in the SRH of the packet is specifically that the value of the first field is equal to the value of the SL field in the SRH, or that the value of the first field is equal to a sum of the value of the SL field in the SRH and n. To be specific, the value of the first field=SL+n, where n is an integer greater than or equal to 1.

In an example, the first field includes a first subfield and a second subfield, and that the first network node determines, based on the indication information, that the first network node needs to process at least one TLV in the one or more TLVs includes: When the first network node determines that the one or more indication entries include a specific indication entry, a value of a first subfield of the specific indication entry corresponds to a value of an SL field in the SRH of the packet, and a value of a second subfield corresponds to a value of a CL field in the SRH of the packet, the first network node determines that the first network node needs to process at least one TLV in the one or more TLVs. With reference to FIG. 6B, the first field in the indication entry is a combination of <SID index, CSID index> in FIG. 6B. The first subfield of the first field is the SID index field, and the second subfield of the first field is the CSID index field.

In an example, that a value of a first subfield of the specific indication entry corresponds to a value of an SL field in the SRH of the packet is specifically that the value of the first subfield is equal to the value of the SL field in the SRH, or that the value of the first subfield is equal to a sum of the value of the SL field in the SRH and n. To be specific, the value of the first subfield=SL+n, where n is an integer greater than or equal to 1. That a value of a second subfield corresponds to a value of a compressed segment identifier left in the SRH of the packet is specifically that the value of the second subfield is equal to the value of the compressed segment identifier left in the SRH, or the value of the second subfield is equal to a sum of the value of the compressed segment identifier left in the SRH and n. To be specific, the value of the second subfield=the compressed segment identifier left+n, where n is an integer greater than or equal to 1.

In an example, when the first network node determines that the one or more indication entries include a specific indication entry, and a value of a first field of the specific indication entry is equal to an identifier of the first network node, the first network node determines that the first network node needs to process at least one TLV in the one or more TLVs.

S506: The first network node processes the TLV that needs to be processed by the first network node.

In an example, the first network node determines that a TLV identified by a second field of the specific indication entry is the TLV that needs to be processed by the first network node. For example, when the second field is a bitmap field, and the first network node determines that both the 1^{st} bit and the 3^{rd} bit of the bitmap field are set to 1, the first network node determines that the first network node needs to separately process the 1^{st} TLV and the 3^{rd} TLV in the plurality of TLVs. Optionally, when the second field is of a specific value, for example, when a value of the second field is 4, the first network node determines that the first network node needs to process the 4^{th} TLV in the plurality of TLVs, or when a value of the second field is 34, the first network node determines that the first network node needs to process the 3^{rd} TLV and the 4^{th} TLV in the plurality of TLVs.

In an example, the first network node determines a position of the specific indication entry in the packet according to the following formula:
start position of the specific indication entry in the packet=end position of the third field in the packet+(value of the third field-1)*(length of the first field+length of the second field). In this formula, "*" means multiplication.

A meaning of the formula is that a position obtained after the end position of the third field in the packet is offset by a specific length is the start position of the specific indication entry in the packet. A value of the specific length is a product of (value of the third field-1) and (length of the first field+length of the second field). The end position of the third field in the packet may also be referred to as a tail of the third field in the packet.

According to the foregoing technical solution, the second network node controls, by including the indication information in the packet, which network node needs to process the TLV in the packet. After receiving the packet, the first network node determines, based on the indication information, whether the first network node needs to process the TLV included in the packet. If determining that the first network node needs to process the TLV included in the packet, the first network node further determines, based on the indication information, a TLV or TLVs that needs/need to be processed in the packet, so that packet processing flexibility is improved, and a controller does not need to separately configure a TLV processing policy for each network node.

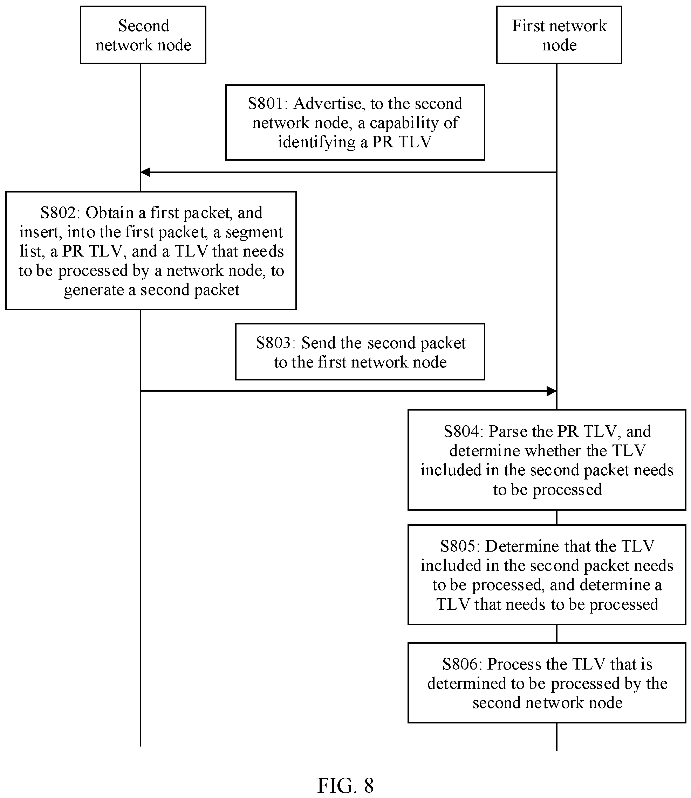

With reference to the application scenario shown in FIG. 1, referring to FIG. 8, an embodiment of this application provides a flowchart of a packet processing method. As shown in FIG. 8, the method includes the following steps.

S801: A first network node advertises a capability notification message to another node in a network, where the capability notification message indicates a capability of the first network node to identify a PR TLV in a packet, namely, a capability of the first network node to support processing a specific TLV in the packet.

S802: A second network node obtains a first packet, and inserts an SRH into the first packet, to generate a second packet. The SRH includes a segment list, the PR TLV in the foregoing embodiment, and TLVs that need to be processed by a network node. The TLVs that need to be processed by the network node are arranged in sequence, for example, a TLV 1, a TLV 2, and a TLV 3. After the second network node receives the capability notification message sent by the first network node, if determining that the first network node is on a forwarding path of the first packet, and determining, based on a network topology or a service requirement, that the first network node needs to process a specific TLV, the second network node adds, to the PR TLV, an indication entry corresponding to the first network node, to indicate the first network node to process the specific TLV in the packet.

S803: The second network node sends the second packet to the first network node.

S804: After receiving the second packet, the first network node parses the PR TLV, to determine whether the first network node needs to process the TLV included in the second packet.

In an example, the first network node obtains, based on the Index No field in the PR TLV and according to the formula in the embodiment shown in FIG. 5, an indication entry that may be identified by the first network node. The first network node determines, based on an SL field in the SRH in the received second packet, whether the first network node needs to process the TLV in the second packet. For example, when a value of the SL field is equal to a value of an SID index field in the obtained indication entry, the first network node determines that the first network node needs to process a TLV corresponding to a bitmap field in the obtained indication entry.

S805: When determining that the first network node needs to process the TLV included in the second packet, the first network node further determines a TLV or TLVs that needs/need to be processed by the first network node in the TLVs included in the second packet.

In an example, the first network node determines, based on the bitmap field in the obtained indication entry, the TLV that needs to be processed by the first network node. For example, an index, based on a sequence from a lower order to a higher order of the bitmap field, of a bit whose value is 1 in the bitmap field corresponds to a sequence number of the TLV that needs to be processed by the first network node. For example, when a value of the 2^{nd} bit of the bitmap field is 1, the first network node determines that the 2^{nd} TLV in the TLVs included in the second packet needs to be processed.

S806: The first network node processes the TLV that is determined to be processed by the first network node. For example, when the first network node determines that the TLV that needs to be processed is an IOAM TLV, the first network node adds, to the IOAM TLV based on an IOAM TLV indication, time of receiving the second packet or an outbound interface for sending the second packet.

When the first network node determines that the first network node does not need to process the TLV included in the second packet, the first network node avoids processing the TLV included in the second packet.

For hardware structures of the first network node and the second network node in this embodiment of this application, refer to FIG. 4A or FIG. 4B.

According to the foregoing technical solution, after receiving the packet, the first network node determines, based on the indication information, whether the first network node needs to process the TLV included in the packet. If determining that the TLV in the packet needs to be processed, the first network node further determines, based on the indication information, a TLV or TLVs that needs/need to be processed in the packet. If determining that the TLV in the packet does not need to be processed, the first network node avoids processing the TLV in the packet, so that packet processing flexibility can be improved.

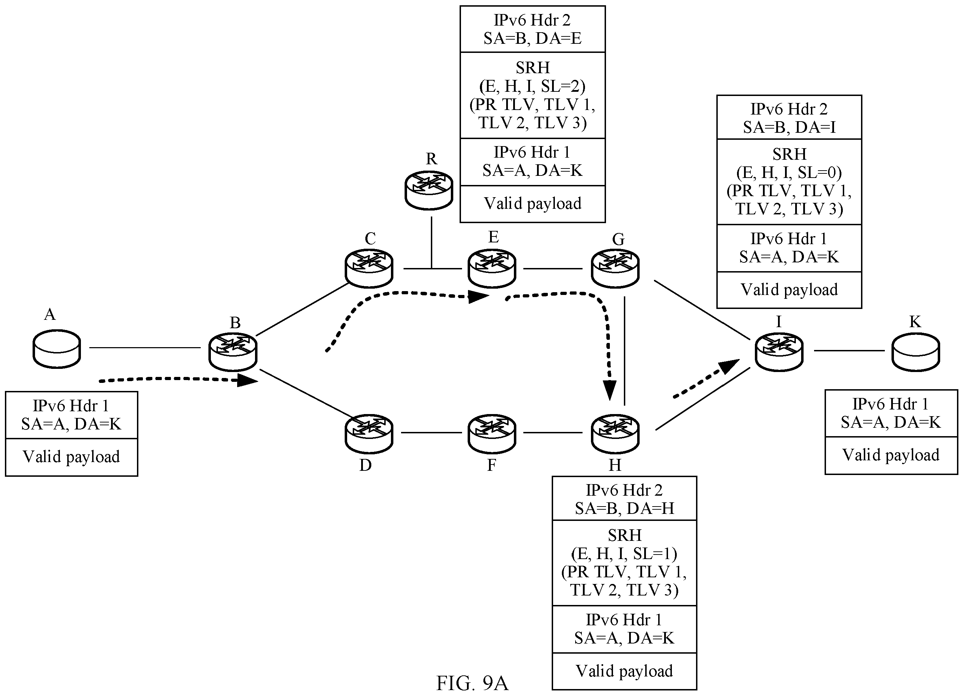

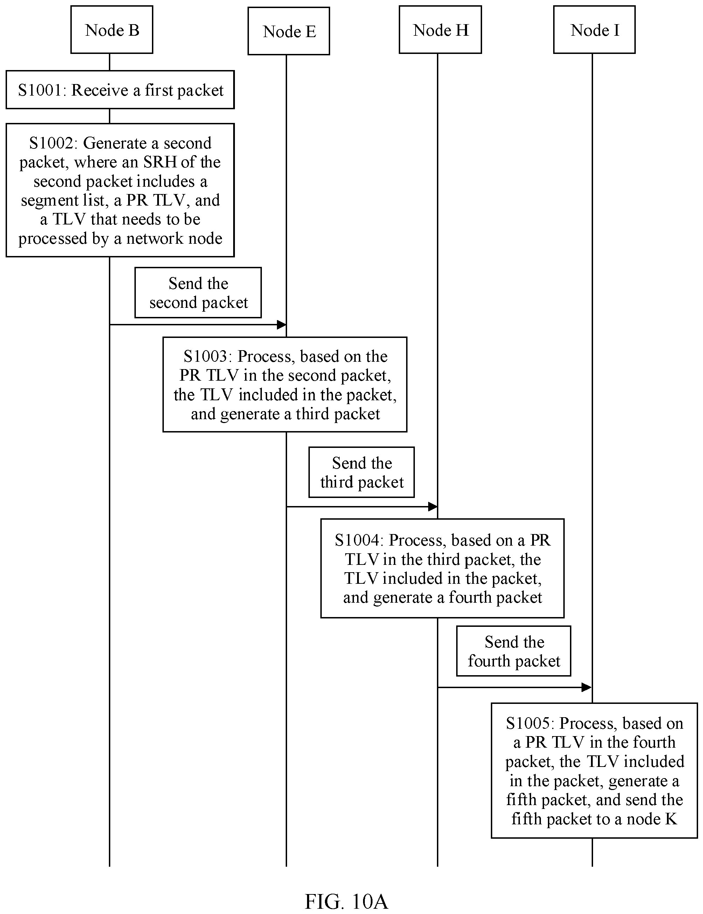

With reference to FIG. 9A, an example is provided for the packet processing method provided in this embodiment of this application. Refer to FIG. 10A. The method specifically includes the following steps.

S1001: A node B receives a first packet from a node A, where the first packet is an IPv6 packet, a destination address of a first IPv6 packet header of the first packet is an IPv6 address of a node K, and a source address of the first IPv6 packet header is an IPv6 address of the node A. The node B obtains a forwarding policy. The forwarding policy may be obtained by the node B from a controller in a network, or may be preconfigured in the node B. The forwarding policy is shown in Table 1. A match condition thereof may be any one element or a combination of a plurality of elements in a quintuple of the packet. For example, the match condition is a destination address of the packet, or the match condition is a combination of a destination address and a source address of the packet. When the match condition is the combination of the destination address and the source address of the packet, matching is successful only when the source address of the packet matches a source address in the match condition and the destination address of the packet matches a destination address in the match condition. Optionally, the match condition may alternatively include an APP ID or other application-related information. For example, the match condition includes an APP ID of the first packet and an element or a combination of a plurality of elements in a quintuple of the packet, for example, an item whose sequence number is 2 in Table 1. The match condition is a combination of the APP ID and a destination address of the packet. The forwarding policy includes a correspondence between the match condition and a segment list. The match condition may be the destination address of the packet, for example, the IPv6 address of the node K. E in the segment list represents an IPv6 address or an SID of a node E. H represents an IPv6 address or an SID of a node H. I represents an IPv6 address or an SID of a node I.

**Table 1 Forwarding policy**

| Sequence number | Match condition | Segment List |
|---|---|---|
| 1 | IPv6 address of the node K | E, H, I |
| 2 | IPv6 address of the node K, and APP ID | E, H |

The node B further obtains the TLV policy in step S501, where the TLV policy is shown in Table 2. A packet attribute may be any one element or a combination of elements in the quintuple of the packet, or may be other information in the packet, for example, a differentiated services code point (Differentiated Services Code Point, DSCP) or the APP ID. A combination of the forwarding policy and the TLV policy may alternatively be an SR policy. A TLV option is a TLV that needs to be added to the packet. A TLV 1, a TLV 2, and a TLV 3 are arranged in sequence after the PR TLV in FIG. 7. For example, a sequence is: the PR TLV, the TLV 1, the TLV 2, and the TLV 3.

**Table 2 TLV policy**

| Sequence number | Packet attribute | TLV option |
|---|---|---|
| 1 | IPv6 address of the node K | TLV 1, TLV 2, TLV 3 |
| 2 | IPv6 address of the node A, and APP ID | TLV 2, TLV 3 |

In an example, the TLV 1 may be a firewall (firewall, FW) TLV, the TLV 2 may be an IOAM TLV, and the TLV 3 may be a deterministic networking (deterministic networking, DetNet) TLV. The DetNet TLV needs to be processed by a multi-fed and selective receiving node, for example, the node I. The FW TLV may be processed by the node E, and the CAM TLV may be processed by the nodes E and H. The DetNet TLV carries a packet serial number. The node that needs to process the DetNet TLV selects, based on the packet serial number carried by the DetNet TLV, to store the 1^{st} received packet having the serial number, and discards a subsequent received packet having the serial number. The IOAM TLV carries an indication for a parameter that needs to be collected and that is related to network performance. For example, the indication indicates the node that needs to process the IOAM TLV to add, to the IOAM TLV, information about time of receiving the packet, an inbound interface for receiving the packet, or an outbound interface for sending the packet. This helps a network management device or another node to detect the network performance. The FW TLV includes indication information, and the indication information is used to indicate the network node that needs to process the FW TLV to send the packet to a firewall for processing.

S1002: The node B matches the forwarding policy based on related information of the first packet. For example, the node B matches the forwarding policy based on the destination address of the first IPv6 packet header. For example, when an item corresponding to the sequence number 1 in the forwarding policy is matched based on the destination address of the first IPv6 packet header, the segment list of the item 1 is obtained. Then, an SRH and a second IPv6 packet header are added to the first packet, to generate a second packet, where the SRH includes the segment list of the item whose sequence number is 1. Then, the TLV policy shown in Table 2 is matched based on the attribute of the first packet. For example, an item whose sequence number is 1 in Table 2 is matched. Then, a TLV option in the TLV policy in the item whose sequence number is 1 is added to the SRH. In addition, a value of an SL field in the SRH is set to 2, where that the value of the SL field is 2 indicates that the packet sent by the node A passes through three nodes that can process the SRH and that are in the SRv6 network. The three nodes are separately the node E, the node H, and the node I. In a process in which the packet sent by the node A is forwarded in the SRv6 network, three segment list elements in the SRH need to be used, which are separately a segment list [0], a segment list [1], and a segment list [2]. A source address of the second IPv6 packet header is the address of the node B, and a destination address is the address of the node E.

The node B determines, based on a position or capability of each node in the segment list in the network, a TLV that needs to be processed by each node. For example, the node I is a multi-fed and selective receiving node, that is, the node I may receive a packet from the node G or the node H, but needs to selectively discard some packets. Therefore, the node I needs to process the TLV 3 in the packet. The node E is a node connected to the firewall, and needs to be indicated to send the packet to the firewall connected to the node E. Therefore, the node E needs to process the TLV 1. The nodes E and H may need to collect information related to network performance measurement, and therefore need to process the TLV 2.

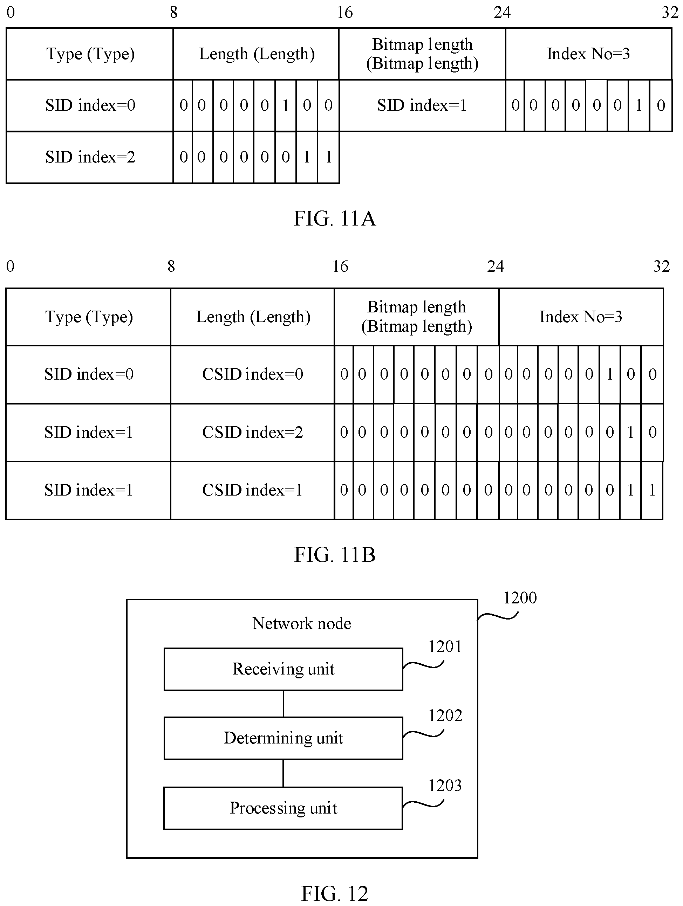

The node B generates the PR TLV based on the TLV that needs to be processed by each node, and adds the PR TLV to the SRH. The node B sends the second packet to the node E. For a specific definition of the PR TLV, refer to the embodiment shown in FIG. 5. For a value of a field in the PR TLV, refer to FIG. 11A. The value of the Index No field in the PR TLV is 3, indicating that three network nodes need to process the TLVs included in the packet, and the three nodes are separately the nodes E, H and I. Because the node E needs to process the TLV 1 and the TLV 2, the node H needs to process the TLV 2, and the node I needs to process the TLV 3, the PR TLV includes three indication entries. Optionally, a bitmap length of each indication entry is one byte, namely, eight bits (bits). Each SID index field in the PR TLV occupies one byte. That a value of an SID index field corresponding to the 1^{st} indication entry is 2, that the 1^{st} bit and the 2^{nd} bit that are obtained based on a sequence from a lower order to a higher order of the bitmap field of the 1^{st} indication entry are both set to 1, or that the 1^{st} bit and the 2^{nd} bit that are obtained based on a sequence from a higher order to a lower order of the bitmap field of the 1^{st} indication entry are both set to 1 indicates that the network node corresponding to the SID index field of the 1^{st} indication entry needs to process the 1^{st} TLV and the 2^{nd} TLV, namely, the TLV 1 and the TLV 2. Optionally, referring to FIG. 11A, the sequence from the lower order to the higher order of the bitmap field may alternatively be understood as a sequence from the right to the left in FIG. 11A, and the sequence from the higher order to the lower order of the bitmap field may alternatively be understood as a sequence from the left to the right in FIG. 11A. That a value of an SID index field corresponding to the 2^{nd} indication entry is 1, that the 2^{nd} bit that is obtained based on a sequence from a lower order to a higher order of the bitmap field of the 2^{nd} indication entry is set to 1, or that the 2^{nd} bit that is obtained based on a sequence from a higher order to a lower order of the bitmap field of the 2^{nd} indication entry is set to 1 indicates that the network node corresponding to the SID index field of the 2^{nd} indication entry needs to process the 2^{nd} TLV, namely, the TLV 2. That a value of an SID index field corresponding to the 3^{rd} indication entry is 0, that the 3^{rd} bit that is obtained based on a sequence from a lower order to a higher order of the bitmap field of the 3^{rd} indication entry is set to 1, or that the 3^{rd} bit that is obtained based on a sequence from a higher order to a lower order of the bitmap field of the 3^{rd} indication entry is set to 1 indicates that the network node corresponding to the SID index field of the 3^{rd} indication entry needs to process the 3^{rd} TLV, namely, the TLV 3.

S1003: The node E receives the second packet. After determining that the destination address of the second IPv6 packet header of the second packet is the address of the node E, the node E parses the PR TLV in the SRH to obtain a value of the Index No field in the PR TLV, and then determines, based on the Index No field in the following manner, an indication entry that may be identified by the node E.

A position of the Index No field in the PR TLV is offset by (Index No-1)*(length of the bitmap field+length of the SID index field) bytes from a tail of the position. In other words, the position is offset by four ((3-1)*(1+1)=4) bytes from the tail of the Index No field in the PR TLV. A position obtained after the offset is a start position of the indication entry that needs to be identified.

In the foregoing manner, the obtained indication entry is the 1^{st} indication entry, namely, the indication entry corresponding to the SID index field whose value is 2, namely, the first indication entry in S 1002. The node E determines that the SID index field of the first indication entry corresponds to the SL field in the SRH of the packet received by the node E. That is, the SID index=the SL (the value of SID index field is 2, and the value of SL field is also 2). The node E determines that the TLV included in the second packet needs to be processed, and a specific TLV that needs to be processed needs to be determined based on the bitmap field in the first indication entry. The node E further parses the first indication entry and obtains the bitmap field of the first indication entry, and determines that values of the 1^{st} bit and the 2^{nd} bit of the bitmap field of the first indication entry are both 1. In this case, the node E determines that the 1^{st} TLV and the 2^{nd} TLV, namely, the TLV 1 and the TLV 2, namely, the FW TLV and the IOAM TLV, in the TLVs that are included in the second packet and that need to be processed by a network node need to be processed. The node E adds, to the IOAM TLV based on an indication of the IOAM TLV, time when the node E receives the second packet or an inbound interface for receiving the second packet. Further, the node E sends, based on an indication of the FW TLV, the second packet to the firewall for processing.

After completing processing the FW TLV and the IOAM TLV, the node E replaces the destination address of the second IPv6 packet header of the second packet with the address of the node H, decreases the SL field by 1, where the value of the SL field is changed to 1, and decreases the Index No field in the PR TLV by 1, where the value of the Index No field is changed to 2, to obtain a third packet. The third packet is sent to the node H.

S1004: The node H receives the third packet. After determining that a destination address of a second IPv6 packet header of the third packet is the address of the node H, the node H parses the PR TLV in the SRH to obtain a value of the Index No field in the PR TLV, and then determines, based on the Index No field in the following manner, an indication entry that may be identified by the node E.

A position of the Index No field in the PR TLV is offset by (Index No-1)*(length of the bitmap field+length of the SID index field) bytes from a tail of the position. In other words, the position is offset by two ((2-1)*(1+1)=2) bytes from the tail of the Index No field in the PR TLV.

In the foregoing manner, the obtained indication entry is the 2^{nd} indication entry, namely, the indication entry corresponding to the SID index field whose value is 1, namely, the second indication entry in S1002. The node H determines that the SID index field of the second indication entry corresponds to the SL field in the SRH of the packet received by the node H. That is, the SID index=the SL (the value of SID index field is 1, and the value of SL field is also 1). The node H determines that the TLV included in the third packet needs to be processed, and a specific TLV that needs to be processed needs to be determined based on the bitmap field in the second indication entry. The node H further parses the second indication entry and obtains the bitmap field of the second indication entry, and determines that a value of the 2^{nd} bit of the bitmap field of the second indication entry is 1. In this case, the node E determines that the 2^{nd} TLV, namely, the TLV 2, namely, the IOAM TLV, in the TLVs that are included in the third packet and that need to be processed by a network node needs to be processed. The node H adds, to the IOAM TLV based on an indication of the IOAM TLV, time when the node H receives the third packet or an inbound interface for receiving the third packet.

After completing processing the IOAM TLV, the node H replaces the destination address of the second IPv6 packet header of the third packet with the address of the node I, decreases the SL field by 1, where the value of the SL field is changed to 0, and decreases the Index No field in the PR TLV by 1, where the value of the Index No field is changed to 1, to obtain a fourth packet. The fourth packet is sent to the node I.

S1005: The node I receives the fourth packet. After determining that a destination address of a second IPv6 packet header of the fourth packet is the address of the node I, the node I parses the PR TLV in the SRH to obtain a value of the Index No field in the PR TLV, and then determines, based on the Index No field in the following manner, an indication entry that may be identified by the node I.

A position of the Index No field in the PR TLV is offset by (Index No-1)*(length of the bitmap field+length of the SID index field) bytes from a tail of the position. In other words, the position is offset by zero ((1-1)*(1+1)=0) byte from the tail of the Index No field in the PR TLV. In other words, the tail of the Index No field is a head of the indication entry that needs to be obtained.

In the foregoing manner, the obtained indication entry is the 3^{rd} indication entry, namely, the indication entry corresponding to the SID index field whose value is 0, namely, the third indication entry in S1002. The node I determines that the SID index field of the third indication entry corresponds to the SL field in the SRH of the packet received by the node I. That is, the SID index=the SL (the value of SID index field is 0, and the value of SL field is also 0). The node I determines that the TLV included in the fourth packet needs to be processed, and a specific TLV that needs to be processed needs to be determined based on the bitmap field in the third indication entry. The node H further parses the third indication entry and obtains the bitmap field of the third indication entry, and determines that a value of the 3^{rd} bit of the bitmap field of the third indication entry is 1. In this case, the node I determines that the 3^{rd} TLV, namely, the TLV 3, namely, the DetNet TLV, in the TLVs that are included in the fourth packet needs to be processed.

After completing processing the DetNet TLV, the node I determines that the value of the SL field is zero, deletes the SRH and the second IPv6 packet header of the fourth packet, to obtain a fifth packet. A packet header of the fifth packet is the first IPv6 packet header, and the fifth packet is the first packet in S 1001. The fifth packet is sent to the node K based on the destination address of the first IPv6 packet.

According to the foregoing technical solution, the network node may determine, based on the indication information included in the received packet, whether the network node needs to process the TLV in the packet. If the network node needs to process the TLV in the packet, the network node further determines, based on the indication information, the TLV that needs to be processed in the packet, and then process the TLV that needs to be processed. In this way, the network nodes that need to process the TLVs in the packet and the TLVs that can be processed by the network nodes in the packet can be flexibly controlled based on an actual situation of a network topology and by using the indication information of the packet, thereby improving packet processing flexibility.

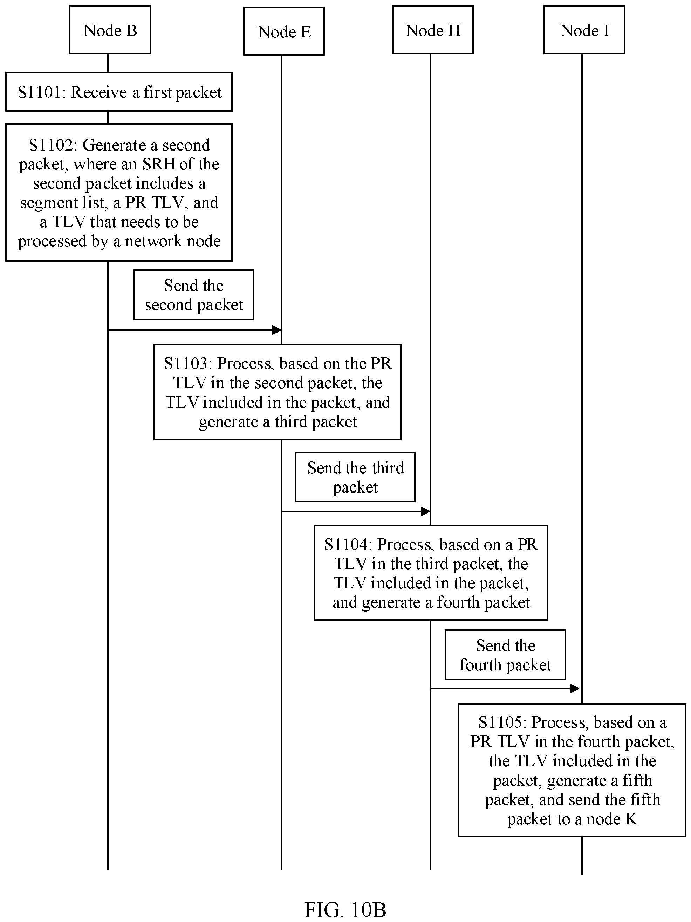

With reference to FIG. 9B, an example is provided for the packet processing method provided in this embodiment of this application. Refer to FIG. 10B. The method specifically includes the following steps.

S1101: A node B receives a first packet from a node A, where the first packet is an IPv6 packet, a destination address of a first IPv6 packet header of the first packet is an IPv6 address of a node K, and a source address of the first IPv6 packet header is an IPv6 address of the node A. The node B further obtains a forwarding policy and a TLV policy. The forwarding policy is shown in Table 1, and the TLV policy is shown in Table 2. E in a segment list in the forwarding policy represents an IPv6 address or an SID of a node E, H represents an IPv6 address or an SID of a node H, and I represents an IPv6 address or an SID of a node I. The addresses of the nodes E and H are compressed addresses, and may alternatively be understood as compressed SIDs. For example, each compressed SID occupies 32 bits, and a position of one element in the segment list may store four compressed SIDs. As shown in FIG. 2B, a CSID 1 may be the compressed SID of the node E, and a CSID 2 is the compressed SID of the node H. Values of a CSID 3 and a CSID 4 are both 0, and the CSID 3 and the CSID 4 do not correspond to a compressed SID of any node.

S1102: The node B matches the forwarding policy based on the destination address of the first IPv6 packet header of the received first packet. The segment list in Table 1 is obtained, and an SRH and a second IPv6 packet header are added to the first packet, to generate a second packet, where the SRH includes the segment list. Then, the TLV policy is matched based on an attribute of the packet, and a TLV option in the TLV policy is added to the SRH.

The node B determines, based on a position or capability of each node in the segment list in the network, a TLV that needs to be processed by each node. For example, the node I is a multi-fed and selective receiving node, that is, the node I may receive a packet from the node G or the node H, but needs to selectively discard some packets. Therefore, the node I needs to process a TLV 3 in the packet. The node E is a node connected to a firewall, and needs to be indicated to send the packet to the firewall connected to the node E. Therefore, the node E needs to process a TLV 1. The nodes E and H may need to collect information related to network performance measurement, and therefore need to process a TLV 2.

The node B generates a PR TLV based on the TLV that needs to be processed by each node, and adds the PR TLV to the SRH. The node B sends the second packet to the node E. For a specific definition of the PR TLV, refer to the embodiment shown in FIG. 5. For a value of a field in the PR TLV, refer to FIG. 11B. The value of the Index No field in the PR TLV is 3, indicating that three network nodes need to process the TLVs included in the packet, and the three nodes are separately the nodes E, H and I. Because the node E needs to process the TLV 1 and the TLV 2, the node H needs to process the TLV 2, and the node I needs to process the TLV 3, the PR TLV includes three indication entries. A length of a bitmap field of each indication entry may be adjusted based on a quantity of TLVs that need to be processed. For example, in FIG. 11B, the bitmap field occupies two bytes, namely, 16 bits (bits). Each SID index field in the PR TLV occupies one byte, and each CSID index field occupies one byte. A value of an SID index field of the 1^{st} indication entry and a value of a CSID index field of the 1^{st} indication entry are both 1. That the 1^{st} and the 2^{nd} bit that are obtained based on a sequence from a lower order to a higher order of the bitmap field of the 1^{st} indication entry are both set to 1, or that the 1^{st} and the 2^{nd} bit that are obtained based on a sequence from a higher order to a lower order of the bitmap field of the 1^{st} indication entry are both set to 1 indicates that the network node corresponding to <SID index, CSID index> of the 1^{st} indication entry needs to process the 1^{st} TLV and the 2^{nd} TLV, namely, the TLV 1 and the TLV 2. A value of an SID index field corresponding to the 2^{nd} indication entry is 1, and a value of a CSID index field of the 2^{nd} indication entry is 2. That the 2^{nd} bit that is obtained based on a sequence from a lower order to a higher order of the bitmap field of the 2^{nd} indication entry is set to 1, or that the 2^{nd} bit that is obtained based on a sequence from a higher order to a lower order of the bitmap field of the 2^{nd} indication entry is set to 1 indicates that the network node corresponding to <SID index, CSID index> of the 2^{nd} indication entry needs to process the 2^{nd} TLV, namely, the TLV 2. A value of an SID index field corresponding to the 3^{rd} indication entry and a value of a CSID index field are both 0. That the 3^{rd} bit that is obtained based on a sequence from a lower order to a higher order of the bitmap field of the 3^{rd} indication entry is set to 1, or that the 3^{rd} bit that is obtained based on a sequence from a higher order to a lower order of the bitmap field of the 3^{rd} indication entry is set to 1 indicates that the network node corresponding to the SID index field of the 3^{rd} indication entry needs to process the 3^{rd} TLV, namely, the TLV 3.

S1103: The node E receives the second packet. After determining that the destination address of the second IPv6 packet header of the second packet is the address of the node E, the node E parses the PR TLV in the SRH to obtain a value of the Index No field in the PR TLV, and then determines, based on the Index No field in the following manner, an indication entry that may be identified by the node E.

A position of the Index No field in the PR TLV is offset by (Index No-1)*(length of the bitmap field+length of the SID index field+length of the CSID index field) bytes from a tail of the position. In other words, the position is offset by eight ((3-1)*(2+1+1)=8) bytes from the tail of the Index No field in the PR TLV.

In the foregoing manner, the obtained indication entry is the 1^{st} indication entry, namely, the indication entry whose SID index field and CSID index field are both 1, namely, the first indication entry in S 1102. The node E determines that the SID index field of the first indication entry corresponds to the SL field in the SRH of the packet received by the node E. That is, the SID index=the SL (the value of SID index field is 1, and the value of SL field is also 1). The node E knows that the SID of the node E is a compressed SID. Therefore, whether the node E needs to process the TLV included in the second packet further needs to be determined based on the CSID index field. The node E obtains the CSID index field of the first indication entry, and determines that the value of the CSID index field corresponds to the value of the CL field in the SRH. That is, the CSID index=the CL (the value of CSID index field is 1, and the value of CL field is also 1). Therefore, the node E determines that the TLV included in the second packet needs to be processed, and a specific TLV or specific TLVs that needs/need to be processed needs/need to be determined based on the bitmap field in the first indication entry. The node E further parses the first indication entry and obtains the bitmap field of the first indication entry, and determines that values of the 1st bit and the 2nd bit of the bitmap field of the first indication entry are both 1. In this case, the node E determines that the 1st TLV and the 2nd TLV, namely, the TLV 1 and the TLV 2, namely, the FW TLV and the IOAM TLV, in the TLVs included in the second packet needs to be processed. The node E adds, to the IOAM TLV based on an indication of the IOAM TLV, time when the node E receives the second packet or an inbound interface for receiving the second packet. Further, the node E sends, based on an indication of the FW TLV, the second packet to the firewall for processing.

After completing processing the FW TLV and the IOAM TLV, the node E replaces the destination address of the second IPv6 packet header of the second packet with the address of the node H, remains the value of the SL field unchanged, increases the value of the CL field by 1, where the value of the CL field is changed to 2, and decreases the Index No field in the PR TLV by 1, where the value of the Index No field is changed to 2, to obtain a third packet. The third packet is sent to the node H.

S1104: The node H receives the third packet. After determining that a destination address of a second IPv6 packet header of the third packet is the address of the node H, the node H parses the PR TLV in the SRH to obtain a value of the Index No field in the PR TLV, and then determines, based on the Index No field in the following manner, an indication entry that may be identified by the node E.

A position of the Index No field in the PR TLV is offset by (Index No-1)*(length of the bitmap field+length of the SID index field+length of the CSID index field) bytes from a tail of the position. In other words, the position is offset by four ((2-1)*(2+1+1)=4) bytes from the tail of the Index No field in the PR TLV.

In the foregoing manner, the obtained indication entry is the 2^{nd} indication entry, namely, the indication entry whose SID index field is 1 and whose CSID index field is 2, namely, the second indication entry in S1102. The node H determines that the SID index field of the second indication entry corresponds to the SL field in the SRH of the packet received by the node H. That is, the SID index=the SL (the value of SID index field is 1, and the value of SL field is also 1). The node H knows that the SID of the node E is a compressed SID. Therefore, whether the node H needs to process the TLV included in the third packet further needs to be determined based on the CSID index field. The node H obtains the CSID index field of the 2^{nd} indication entry, and determines that the value of the CSID index field corresponds to the value of the CL field in the SRH. That is, the CSID index=the CL (the value of CSID index field is 2, and the value of CL field is also 2). Therefore, the node H determines that the TLV included in the third packet needs to be processed, and a specific TLV or specific TLVs that needs/need to be processed needs/need to be determined based on the bitmap field in the second indication entry. The node H further parses the second indication entry and obtains the bitmap field of the second indication entry, and determines that a value of the 2^{nd} bit of the bitmap field of the second indication entry is 1. In this case, the node E determines that the 2^{nd} TLV, namely, the TLV 2, namely, the IOAM TLV, in the TLVs included in the third packet needs to be processed. The node H adds, to the IOAM TLV based on an indication of the IOAM TLV, time when the node H receives the third packet or an inbound interface for receiving the third packet.

After completing processing the IOAM TLV, the node H replaces the destination address of the second IPv6 packet header of the third packet with the address of the node I, decreases the SL field by 1, where the value of the SL field is changed to 0, and changes the value of the CL field to 0. The node H decreases the Index No field in the PR TLV by 1, where the value of the Index No field is changed to 1, to obtain a fourth packet. The fourth packet is sent to the node I.

S1105: The node I receives the fourth packet. After determining that a destination address of a second IPv6 packet header of the fourth packet is the address of the node I, the node I parses the PR TLV in the SRH to obtain a value of the Index No field in the PR TLV, and then determines, based on the Index No field in the following manner, an indication entry that may be identified by the node I.

A position of the Index No field in the PR TLV is offset by (Index No-1)*(length of the bitmap field+length of the SID index field) bytes from a tail of the position. In other words, the position is offset by zero ((1-1)*(2+1+1)=0) byte from the tail of the Index No field in the PR TLV. In other words, the tail of the Index No field in the packet is a head of the indication entry that needs to be obtained in the packet.

In the foregoing manner, the obtained indication entry is the 3^{rd} indication entry, namely, the indication entry whose SID index field is 0, namely, the third indication entry in S 1102. Because the node I knows that the SID of the node I is not a compressed SID, the node I does not need to determine, based on the CSID, whether the node I needs to process the TLV included in the fourth packet. The node I determines that the SID index field of the third indication entry corresponds to the SL field in the SRH of the packet received by the node I. That is, the SID index=the SL (the value of SID index field is 0, and the value of SL field is also 0). The node I determines that the TLV included in the fourth packet needs to be processed, and a specific TLV or specific TLVs that needs/need to be processed needs/need to be determined based on the bitmap field in the third indication entry. The node H further parses the third indication entry and obtains the bitmap field of the third indication entry, and determines that a value of the 3^{rd} bit of the bitmap field of the third indication entry is 1. In this case, the node I determines that the 3^{rd} TLV, namely, the TLV 3, namely, the DetNet TLV, in the TLVs that are included in the fourth packet and that need to be processed needs to be processed.

After completing processing the OAM TLV, the node I determines that the value of the SL field is zero, deletes the SRH and the second IPv6 packet header of the fourth packet, to obtain a fifth packet. The fifth packet is the first packet in S1101. A packet header of the fifth packet is the first IPv6 packet header. The fifth packet is sent to the node K based on the destination address of the first IPv6 packet.

According to the foregoing technical solution, the network node may determine, based on the indication information included in the received packet, whether the network node needs to process the TLV in the packet. If the network node needs to process the TLV in the packet, the network node further determines, based on the indication information, the TLV/TLVs that needs/need to be processed in the packet, and then process the TLV/TLVs that needs/need to be processed. In this way, the network nodes that need to process the TLVs in the packet and the TLVs that can be processed by the network nodes in the packet can be flexibly controlled based on an actual situation of a network topology and by using the indication information of the packet, thereby improving packet processing flexibility.

FIG. 12 is a schematic diagram of a possible structure of a network node in the foregoing embodiment. The network node 1200 may implement a function of the first network node in the instance shown in FIG. 5 or FIG. 8, or may implement a function of the node E, the node H, or the node I in the embodiment shown in FIG. 10A or FIG. 10B. Refer to FIG. 12. The network node 1200 includes a receiving unit 1201, a determining unit 1202, and a processing unit 1203. These units may perform corresponding functions of the first network node in the foregoing method examples. The receiving unit 1201 is configured to support the network node 1200 in performing the process 5504 in FIG. 5. The determining unit 1202 is configured to support the network node 1200 in performing the process 5505 in FIG. 5, or the processes S804 and S805 in FIG. 8. The processing unit 1203 is configured to support the network node 1200 in performing the process S506 in FIG. 5, the process S806 in FIG. 8, and/or another process performed by the first network node in the technology described in this specification. For example, the receiving unit 1201 is configured to receive various information received by the first network node in the foregoing method embodiment. The determining unit 1202 is configured to perform various determining actions performed by the first network node in the foregoing method embodiment. The processing unit 1203 is configured to perform processing, other than a packet receiving action and a packet determining action, of the first network node in the foregoing method embodiment. For example, the receiving unit 1201 is configured to receive a packet sent by a second network node, where the packet includes one or more TLVs that need to be processed by a network node, the packet further includes indication information, and the indication information indicates that at least one network node needs to process at least one TLV in the one or more TLVs. The determining unit 1202 is configured to determine, based on the indication information, that the network node 1200 needs to process at least one TLV in the one or more TLVs, and determine, based on the indication information, a TLV that needs to be processed by the network node 1200. The processing unit 1203 is configured to process the TLV that needs to be processed by the network node 1200. For a specific execution process, refer to detailed descriptions of corresponding steps in the embodiments shown in FIG. 5, FIG. 8, FIG. 10A, or FIG. 10B. Details are not described herein again.

It should be noted that in the embodiments of this application, division into the units is an example and is merely logical function division, and may be other division in an actual implementation. Functional units in the embodiments of this application may be integrated into one processing unit, or each unit may exist alone physically, or two or more units are integrated into one unit. For example, in the foregoing embodiments, the receiving unit and the sending unit may be a same unit or different units. The integrated unit may be implemented in a form of hardware, or may be implemented in a form of a software functional unit.

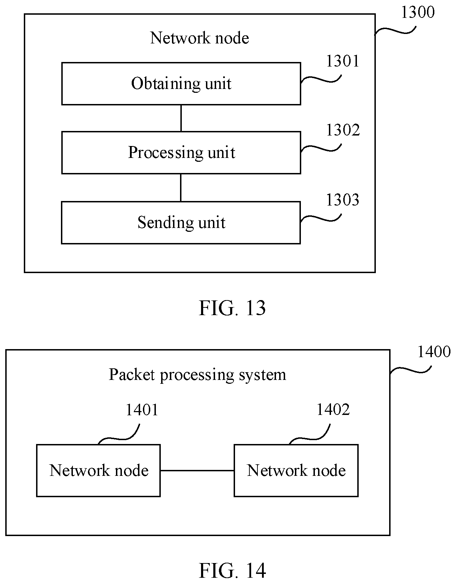

FIG. 13 is a schematic diagram of a possible structure of a network node in the foregoing embodiment. The network node 1300 may implement a function of the second network node in the instance shown in FIG. 5 or FIG. 8, or may implement a function of the node B in the embodiment shown in FIG. 10A or FIG. 10B. Refer to FIG. 13. The network node 1300 includes an obtaining unit 1301, a processing unit 1302, and a sending unit 1303. These units may perform corresponding functions of the second network node in the foregoing method examples. The obtaining unit 1301 is configured to support the network node 1300 in performing the process S501 in FIG. 5 or the process S802 in FIG. 8. The processing unit 1302 is configured to support the network node 1300 in performing the process S502 in FIG. 5 or the process S802 in FIG. 8. The sending unit 1303 is configured to support the network node 1300 in performing the process S503 in FIG. 5 or the process S803 in FIG. 8. For example, the obtaining unit 1301 is configured to obtain various information obtained by the second network node in the foregoing method example. The sending unit 1303 is configured to send various information sent by the second network node in the foregoing method example. The processing unit 1302 is configured to perform processing, other than an information obtaining action and an information sending action, of the second network node in the foregoing method example. For example, the obtaining unit 1301 is configured to obtain a first packet. The processing unit 1302 is configured to add, to the first packet, indication information and one or more TLVs that need to be processed by a network node on a forwarding path of the first packet, to generate a second packet, where the indication information indicates that at least one network node needs to process at least one TLV in the one or more TLVs, and the indication information is further used to indicate a TLV that needs to be processed by the at least one network node. The sending unit 1303 is configured to send the second packet to a first network node on the forwarding path. For a specific execution process, refer to detailed descriptions of corresponding steps in the embodiments shown in FIG. 5, FIG. 8, FIG. 10A, or FIG. 10B. Details are not described herein again.

Refer to FIG. 14. An embodiment of the present invention provides a packet processing system 1400. The system 1400 is configured to implement the packet processing method in the foregoing method embodiments. The system 1400 includes a network node 1401 and a network node 1402. The network node 1401 may implement the first network node in the embodiment shown in FIG. 5 or FIG. 8, and the network node 1402 may implement a function of the second network node in the embodiment shown in FIG. 5 or FIG. 8. The network node 1401 may alternatively implement a function of the node E, the node H, or the node I in the embodiment shown in FIG. 10A or FIG. 10B, and the network node 1401 may alternatively implement a function of the node B in the embodiment shown in FIG. 10A or FIG. 10B. For a specific execution process, refer to detailed descriptions of corresponding steps in the embodiments shown in FIG. 5, FIG. 8, FIG. 10A, or FIG. 10B. Details are not described herein again.

An embodiment of this application further provides a computer-readable storage medium, configured to store program code or instructions used in the foregoing embodiments. When the program code or the instructions is/are executed on a computer or a device, the computer or the device is enabled to perform the method in the foregoing method embodiments.

"First" in the first network node in the embodiments of this application is merely used as a name identifier, and does not represent the first in sequence. The rule is also applicable to "second", "third", "fourth" and "fifth".

It should be noted that any network node embodiment described above is merely an example. The units described as separate parts may or may not be physically separate, and parts displayed as units may or may not be physical units, may be located at one location, or may be distributed on a plurality of network units. Some or all the modules may be selected according to actual needs to achieve the objectives of the solutions of the embodiments. In addition, in the accompanying drawings of the network node embodiments provided by this application, connection relationships among modules indicate that the modules have communication connections to each other, which may be specifically implemented as one or more communication buses or signal cables. A person of ordinary skill in the art may understand and implement the embodiments of the present invention without creative efforts.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read-only memory (electrically EPROM, EEPROM), a hard disk, a removable hard disk, a compact disc, or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that facilitates transmission of a computer program from one place to another. The storage medium may be any available medium accessible to a general-purpose or dedicated computer.

The objectives, technical solutions, and benefits of this application are further described in detail in the foregoing specific embodiments. It should be understood that the foregoing descriptions are merely specific embodiments of this application, but are not intended to limit the protection scope of this application.

## Claims

1. A packet processing method, comprising:
receiving, by a first network node (1200; 1401), a packet sent by a second network node (1300; 1402), wherein the packet comprises one or more type-length-values, TLVs, that need to be processed by at least one network node, the packet further comprises indication information, and the indication information indicates that the at least one network node needs to process at least one TLV in the one or more TLVs;
determining, by the first network node (1200; 1401) based on the indication information, that the first network node (1200; 1401) needs to process at least one TLV in the one or more TLVs;
in response to that the first network node (1200; 1401) determines that the first network node (1200; 1401) needs to process at least one TLV in the one or more TLVs, determining, by the first network node (1200; 1401) based on the indication information, a TLV that needs to be processed by the first network node (1200; 1401); and
processing, by the first network node (1200; 1401), the TLV that needs to be processed by the first network node (1200; 1401),
**characterized in that**
the indication information is included in a TLV and comprises one or more indication entries, each indication entry comprises a first field and a second field, the first field is used to identify a network node that needs to process at least one TLV in the one or more TLVs, and the second field is used to identify a TLV that needs to be processed by the network node identified by the first field.

2. The method according to claim 1, wherein the determining, by the first network node (1200; 1401) based on the indication information, that the first network node (1200; 1401) needs to process at least one TLV in the one or more TLVs comprises:
when the first network node (1200; 1401) determines that the one or more indication entries comprise a specific indication entry, and a value of a first field of the specific indication entry corresponds to a value of a segment left, SL, in a segment routing header, SRH, of the packet, determining, by the first network node (1200; 1401), that the first network node (1200; 1401) needs to process at least one TLV in the one or more TLVs.

3. The method according to claim 1, wherein the first field comprises a first subfield and a second subfield, and the determining, by the first network node (1200; 1401) based on the indication information, that the first network node (1200; 1401) needs to process at least one TLV in the one or more TLVs comprises:
when the first network node (1200; 1401) determines that the one or more indication entries comprise a specific indication entry, a value of a first subfield of the specific indication entry corresponds to a value of a SL in a SRH of the packet, and a value of a second subfield corresponds to a value of a compressed segment identifier left in the SRH of the packet, determining, by the first network node (1200; 1401), that the first network node (1200; 1401) needs to process at least one TLV in the one or more TLVs.

4. The method according to claim 2 or 3, wherein the determining, by the first network node (1200; 1401) based on the indication information, a TLV that needs to be processed by the first network node (1200; 1401) comprises:
determining, by the first network node (1200; 1401), that a TLV identified by a second field of the specific indication entry is the TLV that needs to be processed by the first network node (1200; 1401).

5. The method according to any one of claims 1 to 4, wherein
the second field of the indication entry is a bitmap field, and
an index, based on a sequence from a lower order to a higher order of the bitmap field or a sequence from a higher order to a lower order of the bitmap field, of a bit whose value is 1 in the bitmap field corresponds to a sequence number of the TLV that needs to be processed by the network node identified by the first field.

6. The method according to any one of claims 2 to 4, wherein the indication information further comprises a third field, and the third field is used to identify a quantity of network nodes that need to process the TLV.

7. The method according to claim 6, further comprising:
determining, by the first network node (1200; 1401), a position of the specific indication entry in the packet based on the first field, the second field, and the third field.

8. A packet processing method, comprising:
obtaining, by a second network node (1300; 1402), a first packet;
adding, by the second network node (1300; 1402) to the first packet, indication information and one or more type-length-values, TLVs, that need to be processed by at least one network node on a forwarding path of the first packet, to generate a second packet, wherein the indication information indicates that the at least one network node needs to process at least one TLV in the one or more TLVs, and the indication information is further used to indicate a TLV that needs to be processed by the at least one network node; and
sending, by the second network node (1300; 1402), the second packet to a first network node (1200; 1401) on the forwarding path,
**characterized in that**
the indication information is included in a TLV and comprises one or more indication entries, each indication entry comprises a first field and a second field, the first field is used to identify a network node that needs to process at least one TLV in the one or more TLVs, and the second field is used to identify a TLV that needs to be processed by the network node identified by the first field.

9. The method according to claim 8, wherein
the second field is a bitmap field, and
an index, based on a sequence from a lower order to a higher order of the bitmap field or a sequence from a higher order to a lower order of the bitmap field, of a bit whose value is 1 in the bitmap field corresponds to a sequence number of the TLV that needs to be processed by the network node identified by the first field.

10. The method according to claim 8 or 9, wherein the indication information further comprises a third field, and the third field is used to identify a quantity of network nodes that need to process the TLV.

11. The method according to any one of claims 8 to 10, wherein the indication information further comprises a fourth field, and the fourth field is used to identify a length of the second field.

12. A network node (1200; 1401), used in a network system (1400) comprising a plurality of network nodes, wherein the plurality of network nodes comprise a first network node (1200; 1401) and a second network node (1300; 1402), the network node (1200; 1401) is the first network node (1200; 1401), and wherein the network node (1200; 1401) is configured to implement the method according to any one of claims 1 to 7.

13. A network node (1300; 1402), used in a network system (1400) comprising a plurality of network nodes, wherein the plurality of network nodes comprise a first network node (1200; 1401) and a second network node (1300; 1402), the network node (1300; 1402) is the second network node (1300; 1402), and wherein the network node (1300; 1402) is configured to implement the method according to any one of claims 8 to 11.

## Patentansprüche

1. Paketverarbeitungsverfahren, das Folgendes umfasst:
Empfangen, durch einen ersten Netzwerkknoten (1200; 1401), eines durch einen zweiten Netzwerkknoten (1300; 1402) gesendeten Pakets, wobei das Paket einen oder mehrere Typlängenwerte bzw. TLVs umfasst, die durch mindestens einen Netzwerkknoten verarbeitet werden müssen, das Paket ferner Angabeinformationen umfasst und die Angabeinformationen angeben, dass der mindestens eine Netzwerkknoten mindestens einen TLV in einem oder mehreren TLVs verarbeiten muss,
Bestimmen, durch den ersten Netzwerkknoten (1200; 1401) basierend auf den Angabeinformationen, dass der erste Netzwerkknoten (1200; 1401) mindestens einen TLV in dem einen oder den mehreren TLVs verarbeiten muss,
als Reaktion darauf, dass der erste Netzwerkknoten (1200; 1401) bestimmt, dass der erste Netzwerkknoten (1200; 1401) mindestens einen TLV in dem einen oder den mehreren TLVs verarbeiten muss, Bestimmen, durch den ersten Netzwerkknoten (1200; 1401) basierend auf den Angabeinformationen, eines TLV, der durch den ersten Netzwerkknoten (1200; 1401) verarbeitet werden muss, und
Verarbeiten, durch den ersten Netzwerkknoten (1200; 1401), des TLV, der durch den ersten Netzwerkknoten (1200; 1401) verarbeitet werden muss,
**dadurch gekennzeichnet, dass**
die Angabeinformationen in einem TLV enthalten sind und einen oder mehrere Angabeeinträge umfassen, jeder Angabeeintrag ein erstes Feld und ein zweites Feld umfasst, das erste Feld verwendet wird, um einen Netzwerkknoten zu identifizieren, der mindestens einen TLV in dem einen oder den mehreren TLVs verarbeiten muss, und das zweite Feld verwendet wird, um einen TLV zu identifizieren, der durch den durch das erste Feld identifizierten Netzwerkknoten verarbeitet werden muss.

2. Verfahren nach Anspruch 1, wobei das Bestimmen, durch den ersten Netzwerkknoten (1200; 1401) basierend auf den Angabeinformationen, dass der erste Netzwerkknoten (1200; 1401) mindestens einen TLV in dem einen oder den mehreren TLVs verarbeiten muss, Folgendes umfasst:
wenn der erste Netzwerkknoten (1200; 1401) bestimmt, dass der eine oder die mehreren Angabeeinträge einen spezifischen Angabeeintrag umfassen und ein Wert eines ersten Felds des spezifischen Angabeeintrags einem Wert eines "Segment Left" bzw. SL in einem "Segment Routing Header" bzw. SRH des Pakets entspricht, Bestimmen, durch den ersten Netzwerkknoten (1200; 1401), dass der erste Netzwerkknoten (1200; 1401) den mindestens einen TLV in dem einen oder den mehreren TLVs verarbeiten muss.

3. Verfahren nach Anspruch 1, wobei das erste Feld ein erstes Subfeld und ein zweites Subfeld umfasst und das Bestimmen, durch den ersten Netzwerkknoten (1200; 1401) basierend auf den Angabeinformationen, dass der erste Netzwerkknoten (1200; 1401) mindestens einen TLV in dem einen oder den mehreren TLVs verarbeiten muss, Folgendes umfasst:
wenn der erste Netzwerkknoten (1200; 1401) bestimmt, dass der eine oder die mehreren Angabeeinträge einen spezifischen Angabeeintrag umfassen, ein Wert eines ersten Subfelds des spezifischen Angabeeintrags einem Wert eines SL in einem SRH des Pakets entspricht und ein Wert eines zweiten Subfelds einem Wert eines "Compressed Segment Identifier Left" in dem SRH des Pakets entspricht, Bestimmen, durch den ersten Netzwerkknoten (1200; 1401), dass der erste Netzwerkknoten (1200; 1401) den mindestens einen TLV in dem einen oder den mehreren TLVs verarbeiten muss.

4. Verfahren nach Anspruch 2 oder 3, wobei das Bestimmen, durch den ersten Netzwerkknoten (1200; 1401) basierend auf den Angabeinformationen, eines TLV, der durch den ersten Netzwerkknoten (1200; 1401) verarbeitet werden muss, Folgendes umfasst:
Bestimmen, durch den ersten Netzwerkknoten (1200; 1401), das ein durch ein zweites Feld des spezifischen Angabeeintrags identifizierter TLV der TLV ist, der durch den ersten Netzwerkknoten (1200; 1401) verarbeitet werden muss.

5. Verfahren nach einem der Ansprüche 1 bis 4, wobei
das zweite Feld des Angabeeintrags ein Bitmap-Feld ist und
ein Index, basierend auf einer Sequenz von einer niedrigeren Ordnung zu einer höheren Ordnung des Bitmap-Felds oder einer Sequenz von einer höheren Ordnung zu einer niedrigeren Ordnung des Bitmap-Felds, eines Bits mit einem Wert von 1 in dem Bitmap-Feld einer Sequenznummer des TLV entspricht, der durch den durch das erste Feld identifizierten Netzwerkknoten verarbeitet werden muss.

6. Verfahren nach einem der Ansprüche 2 bis 4, wobei die Angabeinformationen ferner ein drittes Feld umfassen und das dritte Feld verwendet wird, um eine Anzahl von Netzwerkknoten zu identifizieren, die den TLV verarbeiten müssen.

7. Verfahren nach Anspruch 6, das ferner Folgendes umfasst:
Bestimmen, durch den ersten Netzwerkknoten (1200; 1401), einer Position des spezifischen Angabeeintrags in dem Paket basierend auf dem ersten Feld, dem zweiten Feld und dem dritten Feld.

8. Paketverarbeitungsverfahren, das Folgendes umfasst:
Erhalten, durch einen zweiten Netzwerkknoten (1300; 1402), eines ersten Pakets, Hinzufügen, durch den zweiten Netzwerkknoten (1300; 1402) zu dem ersten Paket, von Angabeinformationen und einem oder mehreren Typlängenwerten bzw. TLVs, die durch mindestens einen Netzwerkknoten verarbeitet werden müssen, auf einem Weiterleitungspfad des ersten Pakets, um ein zweites Paket zu erzeugen, wobei die Angabeinformationen angeben, dass der mindestens eine Netzwerkknoten mindestens einen TLV in dem einen oder den mehreren TLVs verarbeiten muss, und die Angabeinformationen ferner verwendet werden, um einen TLV anzugeben, der durch den mindestens einen Netzwerkknoten verarbeitet werden muss, und
Senden, durch den zweiten Netzwerkknoten (1300; 1402), des zweiten Pakets an den ersten Netzwerkknoten (1200; 1401) auf dem Weiterleitungspfad,
**dadurch gekennzeichnet, dass**
die Angabeinformationen in einem TLV enthalten sind und einen oder mehrere Angabeeinträge umfassen, jeder Angabeeintrag ein erstes Feld und ein zweites Feld umfasst, das erste Feld verwendet wird, um einen Netzwerkknoten zu identifizieren, der mindestens einen TLV in dem einen oder den mehreren TLVs verarbeiten muss, und das zweite Feld verwendet wird, um einen TLV zu identifizieren, der durch den durch das erste Feld identifizierten Netzwerkknoten verarbeitet werden muss.

9. Verfahren nach Anspruch 8, wobei
das zweite Feld ein Bitmap-Feld ist und
ein Index, basierend auf einer Sequenz von einer niedrigeren Ordnung zu einer höheren Ordnung des Bitmap-Felds oder einer Sequenz von einer höheren Ordnung zu einer niedrigeren Ordnung des Bitmap-Felds, eines Bits mit einem Wert von 1 in dem Bitmap-Feld einer Sequenznummer des TLV entspricht, der durch den durch das erste Feld identifizierten Netzwerkknoten verarbeitet werden muss.

10. Verfahren nach Anspruch 8 oder 9, wobei die Angabeinformationen ferner ein drittes Feld umfassen und das dritte Feld verwendet wird, um eine Anzahl von Netzwerkknoten zu identifizieren, die den TLV verarbeiten müssen.

11. Verfahren nach einem der Ansprüche 8 bis 10, wobei die Angabeinformationen ferner ein viertes Feld umfassen und das vierte Feld verwendet wird, um eine Länge des zweiten Felds zu identifizieren.

12. Netzwerkknoten (1200; 1401), der in einem Netzwerksystem (1400), das mehrere Netzwerkknoten umfasst, verwendet wird, wobei die mehreren Netzwerkknoten einen ersten Netzwerkknoten (1200; 1401) und einen zweiten Netzwerkknoten (1300; 1402) umfassen, der Netzwerkknoten (1200; 1401) der erste Netzwerkknoten (1200; 1401) ist und wobei der Netzwerkknoten (1200; 1401) dazu ausgelegt ist, das Verfahren nach einem der Ansprüche 1 bis 7 zu implementieren.

13. Netzwerkknoten (1300; 1402), der in einem Netzwerksystem (1400), das mehrere Netzwerkknoten umfasst, verwendet wird, wobei die mehreren Netzwerkknoten einen ersten Netzwerkknoten (1200; 1401) und einen zweiten Netzwerkknoten (1300; 1402) umfassen, der Netzwerkknoten (1300; 1402) der zweite Netzwerkknoten (1300; 1402) ist und wobei der Netzwerkknoten (1300; 1402) dazu ausgelegt ist, das Verfahren nach einem der Ansprüche 8 bis 11 zu implementieren.

## Revendications

1. Procédé de traitement de paquets, comprenant :
la réception, par un premier noeud de réseau (1200 ; 1401), d'un paquet envoyé par un deuxième noeud de réseau (1300 ; 1402), dans lequel le paquet comprend une ou plusieurs valeurs de longueur type, TLV, qui doivent être traitées par au moins un noeud de réseau, le paquet comprend en outre des informations d'indications, et les informations d'indications indiquent que l'au moins un noeud de réseau doit traiter au moins une TLV dans les une ou plusieurs TLV ;
la détermination, par le premier noeud de réseau (1200 ; 1401) sur la base des informations d'indications, que le premier noeud de réseau (1200 ; 1401) doit traiter au moins une TLV dans les une ou plusieurs TLV ;
en réponse au fait que le premier noeud de réseau (1200 ; 1401) détermine que le premier noeud de réseau (1200 ; 1401) doit traiter au moins une TLV dans les une ou plusieurs TLV, la détermination, par le premier noeud de réseau (1200 ; 1401) sur la base des informations d'indications, d'une TLV qui doit être traitée par le premier noeud de réseau (1200 ; 1401) ; et
le traitement, par le premier noeud de réseau (1200 ; 1401), de la TLV qui doit être traitée par le premier noeud de réseau (1200 ; 1401),
**caractérisé en ce que**
les informations d'indications sont comprises dans une TLV et comprennent une ou plusieurs entrées d'indications, chaque entrée d'indications comprend un premier champ et un deuxième champ, le premier champ est utilisé pour identifier un noeud de réseau qui doit traiter au moins une TLV dans les une ou plusieurs TLV, et le deuxième champ est utilisé pour identifier une TLV qui doit être traitée par le noeud de réseau identifié par le premier champ.

2. Procédé selon la revendication 1, dans lequel la détermination, par le premier noeud de réseau (1200 ; 1401) sur la base des informations d'indications, que le premier noeud de réseau (1200 ; 1401) doit traiter au moins une TLV dans les une ou plusieurs TLV comprend :
lorsque le premier noeud de réseau (1200 ; 1401) détermine que les une ou plusieurs entrées d'indications comprennent une entrée d'indications spécifique, et qu'une valeur d'un premier champ de l'entrée d'indications spécifique correspond à une valeur d'un segment laissé, SL, dans un en-tête de routage de segment, SRH, du paquet, la détermination, par le premier noeud de réseau (1200 ; 1401), que le premier noeud de réseau (1200 ; 1401) doit traiter au moins une TLV dans les une ou plusieurs TLV.

3. Procédé selon la revendication 1, dans lequel le premier champ comprend un premier sous-champ et un deuxième sous-champ, et la détermination, par le premier noeud de réseau (1200 ; 1401) sur la base des informations d'indications, que le premier noeud de réseau (1200 ; 1401) doit traiter au moins une TLV dans les une ou plusieurs TLV comprend :
lorsque le premier noeud de réseau (1200 ; 1401) détermine que les une ou plusieurs entrées d'indications comprennent une entrée d'indications spécifique, qu'une valeur d'un premier sous-champ de l'entrée d'indications spécifique correspond à une valeur d'un SL dans un SRH du paquet, et qu'une valeur d'un deuxième sous-champ correspond à une valeur d'un identifiant de segment compressé laissé dans le SRH du paquet, la détermination, par le premier noeud de réseau (1200 ; 1401), que le premier noeud de réseau (1200 ; 1401) doit traiter au moins une TLV dans les une ou plusieurs TLV.

4. Procédé selon la revendication 2 ou 3, dans lequel la détermination, par le premier noeud de réseau (1200 ; 1401) sur la base des informations d'indications, d'une TLV qui doit être traitée par le premier noeud de réseau (1200 ; 1401) comprend :
la détermination, par le premier noeud de réseau (1200 ; 1401), qu'une TLV identifiée par un deuxième champ de l'entrée d'indications spécifique est la TLV qui doit être traitée par le premier noeud de réseau (1200 ; 1401).

5. Procédé selon l'une quelconque des revendications 1 à 4, dans lequel le deuxième champ de l'entrée d'indications est un champ de table de bits, et
un indice, basé sur une séquence d'un ordre inférieur à un ordre supérieur du champ de table de bits ou une séquence d'un ordre supérieur à un ordre inférieur du champ de table de bits, d'un bit dont une valeur est 1 dans le champ de table de bits correspond à un numéro de séquence de la TLV qui doit être traitée par le noeud de réseau identifié par le premier champ.

6. Procédé selon l'une quelconque des revendications 2 à 4, dans lequel les informations d'indications comprennent en outre un troisième champ, et le troisième champ est utilisé pour identifier une quantité de noeuds de réseau qui doivent traiter la TLV.

7. Procédé selon la revendication 6, comprenant en outre :
la détermination, par le premier noeud de réseau (1200 ; 1401), d'une position de l'entrée d'indications spécifique dans le paquet sur la base du premier champ, du deuxième champ et du troisième champ.

8. Procédé de traitement de paquets, comprenant :
l'obtention, par un deuxième noeud de réseau (1300 ; 1402), d'un premier paquet ;
l'ajout, par le deuxième noeud de réseau (1300 ; 1402) au premier paquet, d'informations d'indications et d'une ou plusieurs valeurs de longueur type, TLV, qui doivent être traitées par au moins un noeud de réseau sur un trajet d'acheminement du premier paquet, pour générer un deuxième paquet, dans lequel les informations d'indications indiquent que l'au moins un noeud de réseau doit traiter au moins une TLV dans les une ou plusieurs TLV, et les informations d'indications sont utilisées en outre pour indiquer une TLV qui doit être traitée par l'au moins un noeud de réseau ; et
l'envoi, par le deuxième noeud de réseau (1300 ; 1402), du deuxième paquet à un premier noeud de réseau (1200 ; 1401) sur le trajet d'acheminement,
**caractérisé en ce que**
les informations d'indications sont comprises dans une TLV et comprennent une ou plusieurs entrées d'indications, chaque entrée d'indications comprend un premier champ et un deuxième champ, le premier champ est utilisé pour identifier un noeud de réseau qui doit traiter au moins une TLV dans les une ou plusieurs TLV, et le deuxième champ est utilisé pour identifier une TLV qui doit être traitée par le noeud de réseau identifié par le premier champ.

9. Procédé selon la revendication 8, dans lequel
le deuxième champ est un champ de table de bits, et
un indice, basé sur une séquence d'un ordre inférieur à un ordre supérieur du champ de table de bits ou une séquence d'un ordre supérieur à un ordre inférieur du champ de table de bits, d'un bit dont une valeur est 1 dans le champ de table de bits correspond à un numéro de séquence de la TLV qui doit être traitée par le noeud de réseau identifié par le premier champ.

10. Procédé selon la revendication 8 ou 9, dans lequel les informations d'indications comprennent en outre un troisième champ, et le troisième champ est utilisé pour identifier une quantité de noeuds de réseau qui doivent traiter la TLV.

11. Procédé selon l'une quelconque des revendications 8 à 10, dans lequel les informations d'indications comprennent en outre un quatrième champ, et le quatrième champ est utilisé pour identifier une longueur du deuxième champ.

12. Noeud de réseau (1200 ; 1401), utilisé dans un système de réseau (1400) comprenant une pluralité de noeuds de réseau, la pluralité de noeuds de réseau comprenant un premier noeud de réseau (1200 ; 1401) et un deuxième noeud de réseau (1300 ; 1402), le noeud de réseau (1200 ; 1401) étant le premier noeud de réseau (1200 ; 1401), et le noeud de réseau (1200 ; 1401) étant configuré pour mettre en oeuvre le procédé selon l'une quelconque des revendications 1 à 7.

13. Noeud de réseau (1300 ; 1402), utilisé dans un système de réseau (1400) comprenant une pluralité de noeuds de réseau, la pluralité de noeuds de réseau comprenant un premier noeud de réseau (1200 ; 1401) et un deuxième noeud de réseau (1300 ; 1402), le noeud de réseau (1300 ; 1402) étant le deuxième noeud de réseau (1300 ; 1402), et le noeud de réseau (1300 ; 1402) étant configuré pour mettre en oeuvre le procédé selon l'une quelconque des revendications 8 à 11.
